# EUROPÄISCHE PATENTSCHRIFT

(11) **EP 3 691 949 B1**
(45) Veröffentlichungstag und Bekanntmachung des Hinweises auf die Patenterteilung: **27.10.2021**
(21) Anmeldenummer: 18768828.8
(22) Anmeldetag: 05.09.2018
(51) Int. Cl.: B60W 50/14

(54) **VERFAHREN ZUM BETREIBEN EINES ASSISTENZSYSTEMS FÜR EIN KRAFTFAHRZEUG UND KRAFTFAHRZEUG**
METHOD FOR OPERATING AN ASSISTANCE SYSTEM FOR A MOTOR VEHICLE, AND MOTOR VEHICLE
PROCÉDÉ DE FONCTIONNEMENT D'UN SYSTÈME D'ASSISTANCE POUR UN VÉHICULE AUTOMOBILE ET VÉHICULE AUTOMOBILE

(30) Priorität: 04.10.2017 DE 102017217603
(43) Veröffentlichungstag der Anmeldung: 12.08.2020
(73) Patentinhaber: Volkswagen Aktiengesellschaft, 38440 Wolfsburg (DE)
(72) Erfinder: SCHÖNING, Volkmar, 30900 Wedemark (DE); HÜSEMANN, Frank, 38162 Cremlingen (DE)
(86) Internationale Anmeldenummer: PCT/EP2018/073912
(87) Internationale Veröffentlichungsnummer: WO 2019/068412

(56) Entgegenhaltungen:
- EP-A1- 3 109 119
- WO-A1-2015/049231
- DE-A1-102014 221 132
- DE-A1-102016 008 365
- US-A1- 2014 244 096

## Beschreibung

Die Erfindung betrifft ein Verfahren zum Betreiben eines Assistenzsystems für ein Kraftfahrzeug sowie ein Kraftfahrzeug mit einem derartigen Assistenzsystem.

Bereits heutzutage - und in Zukunft voraussichtlich in zunehmendem Maße - finden hoch- und vollautomatisierte Fahrfunktionen sowie teilautonom fahrende oder sogar - zumindest zeitweise - vollständig autonom fahrende oder agierende Fahrzeuge Eingang in den alltäglichen Straßenverkehr. Mit den bisher verfügbaren Technologien ist jedoch ein sicherer und zuverlässiger vollständig autonomer Fahrbetrieb ohne jegliche Überwachung und ohne jeglichen Eingriff seitens eines menschlichen Fahrzeugführers noch nicht realisierbar. Es ist daher vorgesehen, dass auch in einem autonom agierenden, also fahrenden Kraftfahrzeug der jeweilige Fahrzeugführer eine Kontrolle über das Kraftfahrzeug, also die Steuerung des Kraftfahrzeugs unverzüglich wieder übernehmen muss, wenn er erkennt oder aufgrund offensichtlicher Umstände erkennen muss, dass die Voraussetzungen für eine bestimmungsgemäße Verwendung der hoch- oder vollautomatisierten Fahrfunktionen des Kraftfahrzeugs nicht mehr gegeben sind.

Die Herausforderungen, die sich bei der Entwicklung eines vollständig autonom fahrenden Kraftfahrzeugs ergeben, haben bereits zu einer Vielzahl von Ideen und Lösungsansätzen geführt. Die DE 10 2012 213 965 A1 beschreibt ein Verfahren zum Gewährleisten einer ausreichenden Leistungsfähigkeit eines Fahrers eines Kraftfahrzeugs beim automatisierten Fahren. Dabei wird der Fahrer in zeitlichen Abständen aufgefordert, eine unterschiedliche Aufgabe im Fahrzeug durchzuführen. Ein Automatisierungsgrad für das automatisierte Fahren wird dann in Abhängigkeit von einer Auswertung der Erfüllung der jeweiligen Aufgabe reduziert oder beibehalten.

Die DE 10 2015 209 137 A1 beschreibt ein Verfahren und ein System zur Steuerung einer Fahrfunktion eines Fahrzeugs. Dabei wird die Fahrfunktion in einem ersten Betriebszustand von einem Fahrzeugführungssystem und in einem zweiten Betriebszustand von einem Fahrerwunsch eines Fahrers gesteuert. Ein Übergang von dem ersten in den zweiten Betriebszustand kann mittels einer geordneten Übergabe durch eine vorgegebene

Übergabeprozedur erfolgen, wenn erkannt wird, dass eine vorgegebene erste Bedingung erfüllt ist. Alternativ kann der Übergang in den zweiten Betriebszustand mittels einer Übergabe in einer Rückfallebene erfolgen, wenn erkannt wird, dass eine vorgegebene zweite Bedingung erfüllt ist.

Aus der DE 10 2014 225 804 A1 ist ein Verfahren zur Unterstützung des Führens eines Ego-Fahrzeugs bekannt. Dabei soll aus Umgebungsdaten erkannt werden, ob sich in der Umgebung des Ego-Fahrzeugs ein benachbartes Fahrzeug befindet. Zu einem solchen benachbarten Fahrzeug sollen dann Informationen erfasst und/oder verarbeitet werden, um ein typisches Attribut zu dem benachbarten Fahrzeug zuzuordnen. In Abhängigkeit von diesem Attribut werden dann Steuerinformationen zum Führen des Ego-Fahrzeugs bereitgestellt. Es kann beispielsweise vorgesehen sein, anhand von Daten des amtlichen Kennzeichens des benachbarten Fahrzeugs zu ermitteln, wer der Halter dieses Fahrzeugs ist, um anhand von dessen Altersklasse die Steuerung für den automatischen Fahrbetrieb des Ego-Fahrzeugs zu konditionieren, beispielsweise einen Mindestabstand zu erhöhen.

Aus der DE 10 2014 221 132 A1 ist ein Verfahren zum Anzeigen einer Verfügbarkeit eines autonomen Fahrmodus in einem bestimmten Streckenabschnitt bekannt, bei welchem während des Betriebs eines Kraftfahrzeugs in einem manuellen Modus dem Fahrer über ein Display angezeigt wird, ab wann das Kraftfahrzeug wieder in einem autonomen Fahrmodus betrieben werden kann.

Aus der US 2014/244096 A1 ist ein Assistenzsystem bekannt, bei welchem ein Kraftfahrzeug während der Fahrt streckenabschnittsweise autonom, teilautonom oder manuell betrieben wird. Dazu wird von dem Assistenzsystem je nach Fahrerzustand und Umweltzustand der Fahrtstrecke entschieden, in welchem Fahrmodus, also autonom, teilautonom oder manuell, das autonom fahrende Kraftfahrzeug abschnittsweise betrieben oder ein Nothalt veranlasst werden soll.

Aus der WO 2015/049231 A1 ist ein Assistenzsystem bekannt, bei welchem dem Fahrer über eine Anzeige angezeigt wird, ab wann ein Streckenabschnitt mit einem autonomen Fahrmodus verfügbar ist oder wann dieser endet. Bevor der Streckenabschnitt mit dem autonomen Fahrmodus endet, wird dem Fahrer vor dem Erreichen des Endes um eine vorgegebene Distanz ein Hinweis zur manuellen Übernahme des Kraftfahrzeugs gegeben.

Aufgabe der vorliegenden Erfindung ist es, einen sicheren und zumindest zeitweise autonomen Fahrbetrieb eines Kraftfahrzeugs mit gleichzeitig erhöhtem Insassenkomfort zu ermöglichen. Diese Aufgabe wird erfindungsgemäß durch die Gegenstände der unabhängigen Patentansprüche gelöst. Vorteilhafte Ausgestaltungen und Weiterbildungen der Erfindung sind in den abhängigen Patentansprüchen sowie in der nachfolgenden Beschreibung und in den Zeichnungen angegeben.

Ein erfindungsgemäßes Verfahren dient zum Betreiben eines Assistenzsystems für ein Kraftfahrzeug. Dabei werden Situationsdaten erfasst, die eine Situation des Kraftfahrzeugs charakterisieren. Anhand der erfassten Situationsdaten wird ein Zeitpunkt ermittelt, zu dem das Kraftfahrzeug autonom fahrend voraussichtlich in eine Gefahrensituation mit einem oberhalb eines vorgegebenen Schwellenwertes liegenden Gefahrenpotenzial geraten wird. In einem weiteren Verfahrensschritt wird ein einem Fahrzeugführer des Kraftfahrzeugs zur Nutzung bereitgestelltes Angebot von Funktionen und/oder Inhalten eines Infotainmentsystems des Kraftfahrzeugs in Abhängigkeit von dem ermittelten Zeitpunkt angepasst. Dieses Anpassen basiert dabei auf einer vorgegebenen Klassifikation aller Funktionen und/oder Inhalte des Infotainmentsystems hinsichtlich ihres jeweiligen Einflusses auf eine Übernahmezeit, die der Fahrzeugführer voraussichtlich zur Übernahme einer Kontrolle über das Kraftfahrzeug, also zur Übernahme der Steuerung des Kraftfahrzeugs benötigt.

Unterschiedliche Arten von Medien oder Infotainmentangeboten können einen jeweiligen Konsumenten, hier also beispielsweise den Fahrzeugführer, in unterschiedlichem Maße engagieren, also von einem umgebenden Verkehrsgeschehen ablenken. Entsprechend kann der Fahrzeugführer beispielsweise während oder nach einem Konsumieren rein akustischer Medien -wenn also das Infotainmentsystem beispielsweise Musik wiedergibtschätzungsweise innerhalb von ein bis zwei Sekunden seine Aufmerksamkeit vollständig von dieser Tätigkeit zurück auf das Verkehrsgeschehen, das Kraftfahrzeug und dessen Steuerung lenken. Ist der Fahrzeugführer demgegenüber beispielsweise mit einem interaktiven Videoinhalt, beispielsweise einem Videospiel, beschäftigt, so kann eine deutlich längere Zeit - beispielsweise bis zu einer Minute - verstreichen, bis der Fahrzeugführer sich hiervon physisch, gedanklich und emotional so weit gelöst hat, dass er sicher und zuverlässig eine jeweilige gebende Verkehrssituation erfassen kann oder erfasst hat und daher die Kontrolle oder Steuerung des Kraftfahrzeugs vollständig und sicher übernehmen kann.

Basierend auf diesen Erkenntnissen kann erfindungsgemäß beispielsweise in einer Situation, in der das Kraftfahrzeug voraussichtlich in einer Minute in eine Gefahrensituation gerät oder gelangt, automatisch eine Wiedergabe oder ein Konsum von interaktiven Videoinhalten unterbrochen und/oder ein Starten einer Wiedergabe derartiger Inhalte oder eine Nutzung derartiger Funktionen blockiert oder verhindert werden. Mit anderen Worten kann das Angebot von Funktionen und/oder Inhalten, welche mittels des Infotainmentsystems nutzbar oder über das Infotainmentsystem zugänglich sind beispielsweise auf solche Inhalte oder Funktionen eingeschränkt werden, die einen geringeren Ablenkungsfaktor aufweisen, also dem Fahrzeugführer ein zuverlässiges und sicheres Übernehmen der Kontrolle über das Kraftfahrzeug innerhalb einer kürzeren Zeit ermöglichen. Gerät also das Kraftfahrzeug voraussichtlich in einer Minute in die Gefahrensituation, so kann das Angebot des Infotainmentsystems derart angepasst werden, dass der Fahrzeugführer weiterhin Funktionen oder Inhalte nutzen kann, die es ihm ermöglichen innerhalb signifikant kürzerer Zeit, beispielsweise in maximal zwei Sekunden, die Kontrolle über das Kraftfahrzeug zu übernehmen. In diesem Beispiel kann das Angebot also beispielsweise so angepasst werden, dass der Fahrzeugführer weiterhin Musik hören kann.

Erfindungsgemäß werden als weitere Verfahrensschritte Zustandsdaten, die einen Zustand des Fahrzeugführers charakterisieren, erfasst und die Übernahmezeit in Abhängigkeit von den erfassten Zustandsdaten ermittelt sowie das Angebot von Funktionen und/oder Inhalten des Infotainmentsystems in Abhängigkeit von der ermittelten Übernahmezeit angepasst. Mit anderen Worten wird also die Übernahmezeit nicht nur abhängig von externen Faktoren, wie beispielsweise einer Entfernung des Kraftfahrzeugs von der Gefahrensituation, der umgebenden Verkehrssituation, einer beispielsweise wetterbedingten Umgebungssituation oder dergleichen mehr, bestimmt, sondern es werden individuelle, jeweils aktuelle, also insbesondere variable, Eigenschaften des Fahrzeugführers, also dessen Zustand oder Status, berücksichtigt. Der Zustand des Fahrzeugführers - hier auch als Fahrerzustand oder Fahrerstatus bezeichnet - ist beispielsweise wach, aufmerksam, gesundheitlichen Einschränkungen unterliegend, also krank oder kränklich, müde, abgelenkt, alkoholisiert oder dergleichen mehr, was ganz offensichtlich die Reaktionsgeschwindigkeit, die mentale Leistungsfähigkeit und Flexibilität oder allgemein das Verhalten des Fahrzeugführers beeinflusst. Wird beispielsweise erkannt, dass der Fahrer wach, aufmerksam und gesund ist, so wird von einer kürzeren Übernahmezeit ausgegangen als wenn erkannt wird, dass der Fahrer müde, abgelenkt oder beschäftigt und/oder gesundheitlich eingeschränkt ist. Zum Ermitteln des Zustands des Fahrzeugführers werden als Zustandsdaten beispielsweise Daten einer Fahrerbeobachtungskamera des Kraftfahrzeugs, welche den Fahrzeugführer optisch erfasst oder überwacht, Daten einer Sitzsensorik und/oder anderer Innenraumsensoren des Kraftfahrzeugs, Bediendaten des Infotainmentsystems oder dergleichen mehr erfasst.

Die Übernahmezeit setzt sich aus verschiedenen Teilen oder Abschnitten zusammen. Sie beginnt mit dem Erkennen einer Gefahrensituation durch das Assistenzsystem oder mit einer Ausgabe eines entsprechenden Hinweises, beispielsweise einer Übernahmeaufforderung, an den Fahrzeugführer. Die Übernahmezeit endet, sobald der Fahrzeugführer die Kontrolle über das Kraftfahrzeug, also die Steuerung des Kraftfahrzeugs übernommen hat. Die Übernahmezeit schließt beispielsweise eine Reaktionszeit des Fahrzeugführers ebenso ein wie einen hier als Rüstzeit bezeichneten Zeitabschnitt. Die Rüstzeit kann Zeit sein oder umfassen, die der Fahrzeugführer für vor der Übernahme der Kontrolle über das Kraftfahrzeug notwendig auszuführende physische Tätigkeiten benötigt. Dies sind beispielsweise ein Abnehmen und Verstauen eines Wiedergabegerätes, insbesondere beispielsweise eines Head-Mounted Displays, oder ein Verstellen oder Ausrichten eines Fahrersitzes des Kraftfahrzeugs, beispielsweise aus einer rotierten Stellung oder einer Liegestellung heraus. Ebenso ist diejenige Zeitdauer, die der Fahrzeugführer für einen gedanklichen oder mentalen und gegebenenfalls emotionalen Kontextwechsel von einem Medienkonsum zu der aktuellen Verkehrssituation, also zum aktiven Führen des Kraftfahrzeugs benötigt, von der Übernahmezeit eingeschlossen. Die Übernahmezeit ist also keine konstante Größe, sondern kann mit der jeweiligen Situation, einer Beschäftigung des Fahrzeugführers, individuellen Eigenschaften des Fahrzeugführers und dergleichen mehr variieren.

Auf diese Weise kann vorteilhaft erreicht werden, dass der Fahrzeugführer in als sicher, also nicht als Gefahrensituation eingestuften Fahrsituationen ein möglichst breites Angebot von Funktionen und/oder Inhalten des Kraftfahrzeug, insbesondere des Infotainmentsystems, nutzen kann, wodurch der Komfort gegen über einem grundsätzlichen Verbot einer Nutzung beispielsweise von Videoinhalten oder Kommunikationsfunktionen während eines Fahrbetriebs des Kraftfahrzeugs erhöht werden kann. Da in jeder Situation oder zu jedem Zeitpunkt jedoch nur solche Funktionen und/oder Inhalte zur Nutzung bereitgestellt, also zugänglich gemacht werden, die eine rechtzeitige Übernahme der Kontrolle über das Kraftfahrzeug durch den Fahrzeugführer ermöglichen, also nicht verhindern, wird weiterhin ein sicherer Fahrbetrieb des Kraftfahrzeugs ermöglicht. Tatsächlich kann es möglich sein, dass hierdurch eine gesteigerte Sicherheit zumindest in bestimmten Situationen erreicht werden kann, da der Fahrzeugführer durch die ihm vor dem Eintreten der entsprechenden Gefahrensituation ermöglichte Nutzung der Funktionen und/oder Inhalte des Infotainmentsystems mit größerer Wahrscheinlichkeit in einem entspannten Zustand sein kann. Der Fahrer ist dann also beispielsweise nicht gestresst oder angestrengt, da seine Leistungsfähigkeit oder -kapazität nicht durch ein vorheriges permanentes und letztlich unnötiges passives überwachen des der Gefahrensituation vorausgehenden autonomen Fahrbetriebs des Kraftfahrzeugs beansprucht worden ist.

Es kann besonders vorteilhaft sein, im Falle einer Unterbrechung einer Wiedergabe eines Inhaltes oder einer Nutzung einer Funktion aufgrund einer Gefahrensituation, dem Fahrzeugführer eine Fortsetzung der Wiedergabe oder Nutzung an derselben Stelle zu ermöglichen, sobald das Kraftfahrzeug die jeweilige Gefahrensituation verlassen hat und sich wieder in einem autonomen Fahrbetrieb befindet. Beispielsweise kann zur weiteren Erhöhung des Komforts die Fortsetzung automatisch erfolgen.

Die Situationsdaten können unterschiedliche Daten, unterschiedliche Datenarten und/oder aus unterschiedlichen Quellen stammende Daten oder Informationen sein oder umfassen. Das Erfassen der Situationsdaten kann beispielsweise ein Empfangen von Daten über eine entsprechende Schnittstelle oder ein entsprechendes Interface durch das Assistenzsystem, insbesondere durch eine Rechen- oder Datenverarbeitungseinrichtung und/oder ein Steuergerät des Assistenzsystems, bedeuten oder umfassen. Ebenso kann das Erfassen der Situationsdaten ein aktives Abfragen oder Abrufen von Daten von einer Speichereinrichtung, einer Rechen- oder Datenverarbeitungseinrichtung, von einem Sensor oder einer Sensorik, von einer Diagnoseeinrichtung und/oder von sonstigen Informations- oder Datenquellen durch das Assistenzsystem, insbesondere die Datenverarbeitungseinrichtung und/oder das Steuergerät des Assistenzsystems, bedeuten oder umfassen. Solche sonstigen Datenquellen können beispielsweise fahrzeugexterne Einrichtungen, wie beispielsweise ein anderes Fahrzeug, ein anderer Verkehrsteilnehmer, eine über eine kabellose Datenverbindung erreichbare Servereinrichtung (Cloud-Server), ein Rundfunk- oder Verkehrsleitsystem und/oder dergleichen mehr sein oder umfassen.

Die Situationsdaten können beispielsweise Systemdaten sein oder umfassen, die beispielsweise einen aktuellen und/oder geplanten Fahr- oder Betriebsmodus oder Autonomiegrad des Kraftfahrzeugs, ein Diagnostikergebnis, also einen Fehlerzustand eines oder mehrerer Systeme oder Einrichtungen des Kraftfahrzeugs, einen Beschädigungszustand des Kraftfahrzeugs, also ein Vorliegen oder Nicht-Vorliegen einer Beschädigung des Kraftfahrzeugs, Sensordaten, insbesondere aber von fahrzeugeigenen Sensoren, eine Anzahl von Insassen des Kraftfahrzeugs, einen Beladungszustand des Kraftfahrzeugs, einen Reifendruck des Kraftfahrzeugs, einen Zustand oder Betriebsmodus wenigstens eines weiteren Assistenzsystems des Kraftfahrzeugs und/oder dergleichen mehr angeben. Der Fahrmodus oder Autonomiegrad des Kraftfahrzeugs kann beispielsweise durch die bekannten Autonomiestufen "Level 0" bis "Level 5" beschreiben oder angegeben sein.

Die Situationsdaten können ebenso einen aktuellen und/oder geplanten Fahrzustand des Kraftfahrzeugs, also beispielsweise dessen Geschwindigkeit, Beschleunigung, Lenkwinkel, Nick- und Wankwinkel und/oder dergleichen mehr angeben. Die Situationsdaten können ebenso Navigationsdaten sein oder umfassen oder aus Navigationsdaten, beispielsweise einer geplanten und/oder aktuell verfolgten Route abgeleitet oder berechnet werden oder sein. Anhand von Navigationsdaten kann beispielsweise zum Charakterisieren der Situation des Kraftfahrzeugs bestimmt werden, auf welchem Straßentyp sich das Kraftfahrzeug aktuell befindet, ob und gegebenenfalls in welcher räumlichen und/oder zeitlichen Entfernung ein Wechsel auf einen anderen Straßentyp oder in eine andere Umgebung, beispielsweise in ein anderes Land, zumindest voraussichtlich stattfinden wird. Dazu kann eine aktuelle Position des Kraftfahrzeugs beispielsweise mittels eines satellitengestützten Navigations- oder Positionsbestimmungssystems als Teil der Systemdaten ermittelt oder erfasst werden.

Ein Fahren auf einer geraden Autobahn ist offensichtlich eine gänzlich andere Situation als ein Fahren in einem Innenstadtbereich einer Großstadt und beide Situationen stellen unterschiedliche Anforderungen an ein autonomes Steuersystem des Kraftfahrzeugs und an eine Aufmerksamkeit oder eine Geschwindigkeit, mit der der Fahrzeugführers gegebenenfalls in den Fahrbetrieb eingreifen muss oder eingreifen können muss. Dabei können beispielsweise Verkehrsinformationen - etwa Angaben zu einer Verkehrsdichte - in einer Umgebung des Kraftfahrzeugs und/oder auf der aktuellen Route des Kraftfahrzeugs aktuell gegebene oder voraussichtlich auftretende Staus, Unfälle und/oder Verkehrsbehinderungen oder dergleichen, zum Charakterisieren der Situation des Kraftfahrzeugs relevant sein und entsprechend als Teil der Situationsdaten erfasst werden.

Die Situationsdaten können also Umgebungsdaten sein oder umfassen. Solche Umgebungsdaten können beispielsweise die Art und/oder einen Zustand einer jeweiligen Straße oder Fahrbahn, auf der sich das Kraftfahrzeug befindet, ein Vorhandensein von Straßen- oder Fahrbahnmarkierungen, ein Vorhandensein und gegebenenfalls eine Art einer Verkehrs- oder Fahrzeugleitinfrastruktur und/oder von einer solchen Infrastruktur übermittelte Daten ebenso sein oder umfassen wie beispielsweise Wetterdaten, die eine aktuelle und/oder vorausgesagte Wettersituation in der Umgebung und/oder entlang der Route des Kraftfahrzeugs angeben. Ebenso können die Umgebungsdaten beispielsweise andere Verkehrsteilnehmer, insbesondere deren Positionen, Geschwindigkeiten und/oder Bewegungsrichtungen, angeben.

Die Umgebungsdaten können - ebenso wie andere Teile der Situationsdaten - von einer fahrzeugeigenen Sensorik des Kraftfahrzeugs aktiv oder passiv erfasst oder erzeugt werden. Eine solche Sensorik kann Teil des Assistenzsystems sein und/oder die jeweiligen Daten an das Assistenzsystem übermitteln. Ebenso ist jedoch beispielsweise eine vollständige oder teilweise Übermittlung der Umgebungs- oder Situationsdaten an das Kraftfahrzeug, insbesondere an das Assistenzsystem des Kraftfahrzeugs, mittels einer Fahrzeug-zu-Fahrzeug-Kommunikation (Car-to-Car- oder Car2Car-Kommunikation), einer Car2X- oder einer X2Car-Kommunikation möglich.

Die Situationsdaten können beispielsweise Angaben dazu umfassen, an welchen Stellen, also auf welchen Routen- oder Streckenabschnitten, eine Verbindung mit einer fahrzeugexternen Datenquelle verfügbar oder herstellbar ist. Es kann vorteilhaft sein, dabei auch eine Art oder einen Umfang eines durch die jeweilige Datenquelle bereitstellbaren Datenbestandes als Teil der Situationsdaten zu erfassen. Es kann beispielsweise möglich sein, dass das Assistenzsystem anhand der Navigationsdaten erkennt, dass das Kraftfahrzeug sich auf einen Streckenabschnitt mit geänderter oder besonders anspruchsvoller Verkehrsführung, beispielsweise einen Baustellenbereich oder dergleichen, zubewegt, was zu einer Einstufung als Gefahrensituation führen kann. Ist als Teil der Situationsdaten jedoch die Information verfügbar, dass in diesem Bereich eine Verkehrsleitinfrastruktur vorhanden ist, die detaillierte Fahrzeugführungsdaten oder Streckenführungsdaten für autonome Kraftfahrzeuge bereitstellt oder bereitstellen kann, so kann die entsprechende Situation stattdessen als Standardsituation, als nicht als Gefahrensituation, und demnach als von dem Kraftfahrzeug autonom überwindbare Situation, eingestuft werden, insbesondere gegebenenfalls bevor der entsprechende Streckenabschnitt erreicht ist oder bevor das Kraftfahrzeug sich in Reichweite der entsprechenden Verkehrsleitinfrastruktur befindet.

Die Situationsdaten können ebenso eine jeweilige Tages- und/oder Jahreszeit umfassen. Beispielsweise kann eine bestimmte Situation abhängig von der jeweiligen Tages- und/oder Jahreszeit, zu der das Kraftfahrzeug in die jeweilige Situation gerät, als Gefahrensituation eingestuft werden oder nicht. Hier kann beispielsweise ein Sonnenstand oder Einfallswinkel von Sonnenlicht ebenso relevant sein, wie eine zeitabhängige Neigung oder Wahrscheinlichkeit für bestimmte Wetterphänomene oder Fahrbahnzustände, beispielsweise für eine Ausbildung von Nebel oder Glatteis. Solche Phänomene können sowohl für Sensoren und Assistenzsysteme des Kraftfahrzeugs als auch für andere Verkehrsteilnehmer und letztlich den Fahrzeugführer selbst besondere Herausforderungen darstellen, also zu einer Einstufung als Gefahrensituation führen.

Sofern dem Assistenzsystem Situationsdaten aus mehreren Quellen zur Verfügung stehen, kann besonders vorteilhaft eine Plausibilisierung der Situationsdaten oder eines redundanten Teils davon, insbesondere automatisch, durchgeführt werden. Dadurch kann beispielsweise die Einstufung der jeweiligen Situation als Gefahren- oder Standardsituation mit höherer Zuverlässigkeit oder einem höheren Vertrauenswert erfolgen. Stehen plausibilisierte Daten zur Verfügung, so können beispielsweise anhand dieser Daten bestimmte Parameterwerte angepasst werden. Beispielsweise kann eine Eingreif- oder Eskalationsschwelle für ein zum autonomen Führen des Kraftfahrzeugs verwendetes Assistenzsystem und/oder ein Sicherheitspuffer für ein Eingreifen des Fahrzeugführers und/oder für ein Anpassen des nutzbaren Angebots des Infotainmentsystems angepasst werden.

Eine Gefahrensituation im Sinne der vorliegenden Erfindung ist eine Situation, in der ein sicherer und zuverlässiger autonomer Fahrbetrieb des Kraftfahrzeugs - beispielsweise zumindest mit einer vorgegebenen Wahrscheinlichkeit - nicht möglich ist. Zum Bestimmen dieser Wahrscheinlichkeit und/oder zum Bestimmen des Gefahrenpotenzials einer jeweiligen Situation können die Situationsdaten ausgewertet, also verarbeitet werden. Beispielsweise kann für unterschiedliche Faktoren, Bedingungen, Gegebenheiten, Zustände, Wertebereiche von Sensordaten und dergleichen mehr jeweils ein Gefahrenfaktor definiert und vorgegeben, beispielsweise tabellarisch in einer Speichereinrichtung des Assistenzsystems hinterlegt sein. Gemäß den Situationsdaten können dann beispielsweise alle vorhandenen oder relevanten derartigen Gefahrenfaktoren für die jeweilige Situation aufsummiert oder in sonstiger Weise kombiniert werden, um letztendlich zu berechnen, ob die jeweilige Situation als Gefahrensituation einzustufen ist oder nicht. Allgemein kann jegliche Situation, in der ein Assistenzsystem oder eine Funktionalität oder Funktionseinheit des Kraftfahrzeugs, dass beziehungsweise die für das autonome Fahren oder Betreiben des Kraftfahrzeugs relevante oder notwendige Daten liefern muss, - beispielswese zumindest mit einer vorgegebenen Wahrscheinlichkeit - überfordert ist oder sein wird, also die benötigten Daten nicht oder nicht mit wenigstens einer vorgegebenen Wahrscheinlichkeit oder Zuverlässigkeit oder Vertrauenswürdigkeit liefern kann.

Ebenso kann eine Gefahrensituation eine Situation sein, in der - beispielsweise wenigstens mit einer vorgegebenen Wahrscheinlichkeit - mit einem Auftreten oder Eintreten von irregulären, im Detail unvorhergesehenen Ereignissen gerechnet werden muss. Ist das Kraftfahrzeug in einer aktuellen Situation beispielsweise umgeben von wenigen, ebenfalls autonom fahrenden Kraftfahrzeugen auf einer geraden Autobahn auf trockener Fahrbahn unterwegs, so ist eine Wahrscheinlichkeit für das Eintreten einer irregulären, also beispielsweise verkehrsregelwidrigen, Situation relativ gering. Daher würde diese aktuelle Situation beispielsweise nicht als Gefahrensituation eingestuft werden. Folglich könnte dem Fahrzeugführer in einem solchen Fall also beispielsweise das vollständige Angebot von Funktionen und/oder Inhalten des Infotainmentsystems zugänglich gemacht werden. Demgegenüber kann eine irreguläre Situation beispielsweise mit höherer Wahrscheinlichkeit eintreten, wenn das Kraftfahrzeug beispielsweise in einer innerstädtischen Umgebung, in der Nähe einer Schule bei Straßenglätte umgeben von einer Vielzahl unterschiedlicher Verkehrsteilnehmer, von denen beispielsweise einige als wenig vertrauenswürdig eingestuft worden sind, unterwegs ist. Daher könnte eine solche Situation als Gefahrensituation eingestuft werden und daher dann ein dem Fahrzeugführer zur Nutzung bereitgestelltes oder zugänglich gemachtes Angebot von Funktionen und/oder Inhalten des Infotainmentsystems des Kraftfahrzeugs entsprechend angepasst, insbesondere eingeschränkt werden. Dadurch kann sichergestellt werden, dass der Fahrzeugführer nicht oder nur minimal abgelenkt ist und möglichst schnell die Kontrolle über das Kraftfahrzeug übernehmen kann. Irreguläre Situationen können Situationen sein, in denen das Kraftfahrzeug selbst - beispielsweise aufgrund mangelnder Daten - keine Entscheidung treffen kann, wie das Kraftfahrzeug weiter zu führen oder zu bewegen ist. Aufgrund der nahezu endlosen Vielfalt möglicher Situationen, die im Verkehrsgeschehen auftreten können, kann bisher nicht garantiert werden, dass derartige irreguläre Situationen, also Situationen, die von dem Kraftfahrzeug nicht autonom gehandhabt werden können, nicht auftreten.

Eine Gefahrensituation kann, beispielsweise anhand der Navigationsdaten, bereits im Voraus erkannt werden, was eine entsprechend geplante, beispielsweise abgestufte, Anpassung des Angebots an Funktionen und/oder Inhalten des Infotainmentsystems ermöglichen kann. So kann das Angebot beispielsweise schrittweise reduziert oder eingeschränkt werden mit zunehmender Annäherung des Kraftfahrzeugs an die im Voraus erkannte Gefahrensituation. So kann beispielsweise statt einer abrupten Unterbrechung einer Medienwiedergabe eine allmähliche Ausblendung oder beispielsweise eine allmähliche Reduktion einer Lautstärke erfolgen, um den Fahrzeugführer - etwa darauf, dass er in absehbarer Zeit die Kontrolle übernehmen muss - vorzubereiten und nicht zu erschrecken oder zu imitieren. Hierdurch kann gegebenenfalls die Sicherheit beim Betrieb des Kraftfahrzeugs weiter verbessert werden. Ebenso kann es jedoch möglich sein, dass eine Gefahrensituation spontan oder plötzlich, also unvorhergesehen eintritt. In einem solchen Fall kann beispielsweise ein instantanes Unterbrechen einer Medienwiedergabe erfolgen, was ebenfalls als Anpassen des Angebots von Funktionen und/oder Inhalten des Infotainmentsystems im Sinne der vorliegenden Erfindung zu verstehen ist. Um eine Gefahrensituation im Voraus zu erkennen, kann anhand der Navigationsdaten eine Vorausschau der zu fahrenden oder geplanten Route durchgeführt werden. Ist beispielsweise ein nächster Streckenabschnitt der aktuellen Route ein 300 km langes Stück Autobahn, so kann das vollständige Angebot des Infotainmentsystems bereitgestellt, also zugänglich gemacht werden. Ist der nächste Streckenabschnitt der aktuellen jedoch beispielsweise ein 3 km langer innerstädtischer Abschnitt, so kann ein eingeschränktes Angebot bereitgestellt werden.

Wurde eine Gefahrensituation erkannt oder eine Situation als Gefahrensituation eingestuft, so kann besonders vorteilhaft das Assistenzsystem automatisch ein Steuersignal generieren und an wenigstens ein Sicherheitssystem oder ein entsprechendes Steuergerät aussenden. Hierdurch kann vorteilhaft beispielsweise ein Vorspannen des Sicherheitssystems ermöglicht werden. Es kann also beispielsweise außer dem Angebot des Infotainmentsystems noch wenigstens ein weiteres System oder ein weiterer Parameter des Kraftfahrzeugs oder eines Fahrbetriebs des Kraftfahrzeugs automatisch angepasst werden.

Die Übernahmeaufforderung kann von dem Assistenzsystem automatisch an den Fahrzeugführer ausgegeben oder übermittelt werden. Sie stellt einen Hinweis für den Fahrzeugführer dar, dass er die Kontrolle über das Kraftfahrzeug übernehmen oder zumindest sich für eine verzögerungsfreie Übernahme der Steuerung des Kraftfahrzeugs bereithalten muss. Die Übernahmeaufforderung kann situationsabhängig beispielsweise ausgegeben werden, sobald die Gefahrensituation erkannt wurde oder sobald sich das Kraftfahrzeug bis auf einen vorgegebenen zeitlichen und/oder räumlichen Minimalabstand der Gefahrensituation angenähert hat. Der Ausgabezeitpunkt, zu die Übernahmeaufforderung ausgegeben wird, kann abhängig sein, also in Abhängigkeit davon gewählt werden, welcher Beschäftigung der Fahrzeugführer zu einem bestimmten Zeitpunkt vor Erreichen der Gefahrensituation nachgeht.

Es kann beispielsweise für im Voraus erkannte Gefahrensituationen ein, insbesondere zeitlicher, Abstand bis zum Erreichen der Gefahrensituation vorgegeben sein. Dieser vorgegebene Abstand kann durch diejenige Funktion oder denjenigen Inhalt des Infotainmentsystems bestimmt sein, welche den größten Ablenkungsfaktor aufweist, das heißt, bei deren oder dessen Nutzung der Fahrzeugführer die längste Zeit benötigt, um die Steuerung des Kraftfahrzeugs zu übernehmen. Sobald sich das Kraftfahrzeug bis zu diesem vorgegebenen Abstand der Gefahrensituation angenähert hat, kann beispielsweise überprüft werden, welcher Beschäftigung der Fahrzeuginsasse zu diesem Zeitpunkt nachgeht, das heißt, welche Funktion und/oder welchen Inhalt der Fahrzeuginsasse zu diesem Zeitpunkt nutzt. Abhängig von der ermittelten oder erkannten Beschäftigung des Fahrzeugführers kann anschließend der Ausgabezeitpunkt zur Ausgabe der Übernahmeaufforderung gewählt oder bestimmt werden. Auf diese Weise kann vorteilhaft sichergestellt werden, dass der Fahrzeugführer rechtzeitig die Steuerung des Kraftfahrzeugs übernehmen kann, ohne dass er unnötig früh hierzu aufgefordert wird.

Es kann die Situation auftreten, dass das Angebot für den Fahrzeugführer soweit angepasst oder eingeschränkt wird, dass er keine Videoinhalte, also keine grafischen Anzeigegeräte, beispielsweise einen zentral in einem Armaturenbrett oder einer Mittelkonsole des Kraftfahrzeugs angeordneten Bildschirm des Infotainmentsystems - nutzen kann, während gleichzeitig beispielsweise ein Beifahrer diesen Bildschirm zur Wiedergabe eines Videoinhalts nutzen möchte. Um einer derartigen Situation gerecht zu werden, kann besonders vorteilhaft eine blickwinkelabhängige Steuerung oder Einstellung von in einem Blickfeld des Fahrzeugführers angeordneten Anzeigeflächen oder Anzeigegeräten vorgesehen sein. Hierdurch kann das entsprechende Gerät oder die entsprechende Anzeigefläche, welche insbesondere Teil des Infotainmentsystems des Kraftfahrzeugs sein kann, derart angesteuert werden, dass aus der Perspektive des Fahrzeugführers ein angezeigter Inhalt nicht erkennbar ist aber gleichzeitig aus einer Perspektive des Beifahrers weiter erkennbar bleibt.

Die Bediendaten des Infotainmentsystems können beispielsweise eine Präzision oder Treffgenauigkeit bei der Bedienung eines berührungsempfindlichen Eingabeelementes (berührungsempfindlicher Bildschirm, Touchscreen, Touchpad), eine Bediengeschwindigkeit und/oder eine Konsistenz einer Sequenz von Eingaben oder Bedienhandlungen, beispielsweise hinsichtlich eines durch die Bedienung letztlich erreichten Zieles oder Zustandes des Infotainmentsystems, sein oder angegeben. Die Daten der Sitzsensorik können beispielsweise eine aktuelle Stellung eines von dem Fahrzeugführer besetzten Sitzes des Kraftfahrzeugs beschreiben oder angeben. Befindet sich der Sitz beispielsweise in einer Liegestellung, so kann von einer längeren Übernahmezeit ausgegangen werden als dann, wenn sich der Sitz in einer aufrechten Stellung befindet. Ebenso können zum Bestimmen des Fahrerzustands beispielsweise Daten eines Lenkwinkelsensors des Kraftfahrzeugs ausgewertet werden, die in einem Zeitraum erfasst wurden oder werden, in dem der Fahrzeugführer die Kontrolle über das Kraftfahrzeug innehatte, also während der Fahrzeugführer das Kraftfahrzeug manuell gesteuert hat.

Zum Ermitteln der Übernahmezeit in Abhängigkeit von den Zustandsdaten können beispielsweise ein Kennfeld oder eine tabellarische Zuordnung zwischen verschiedenen Zuständen oder Zustandsmerkmalen und entsprechenden Übernahmezeiten oder einem entsprechenden Einfluss auf die Übernahmezeit vorgegeben sein. Zum Anpassen des Angebots in Abhängigkeit von der Übernahmezeit können beispielsweise ein Schwellenwert oder mehrere Schwellenwerte vorgegeben sein, wobei jeweils eine oder mehrere Funktionen und/oder Inhalte abgeschaltet oder unzugänglich gemacht werden, wenn die ermittelte Übernahmezeit einen jeweiligen Schwellenwert erreicht oder überschreitet. Zusätzlich oder alternativ kann auch hier die Klassifikation aller Funktionen und/oder Inhalte des Infotainmentsystems hinsichtlich ihres Einflusses auf die Übernahmezeit berücksichtigt werden. Insgesamt kann durch das Anpassen des Angebots die voraussichtlich tatsächlich von dem Fahrzeugführer zur Übernahme der Kontrolle über das Kraftfahrzeug benötigte Übernahmezeit an die bis zum Erreichen der Gefahrensituation verfügbare oder verbleibende Zeit angepasst, insbesondere angenähert, werden. Dies wiederum kann zu einer Optimierung sowohl hinsichtlich eines maximalen Komforts als auch hinsichtlich einer ausreichenden Sicherheit beim Nutzen des Kraftfahrzeugs führen.

In weiterer vorteilhafter Ausgestaltung der vorliegenden Erfindung wird eine Insassenüberwachung zum Erfassen der Zustandsdaten erst dann automatisch aktiviert, wenn das Kraftfahrzeug sich der Gefahrensituation bis auf einen vorgegebenen Maximalabstand angenähert hat. Die Insassenüberwachung wird dann automatisch wieder beendet, sobald der Fahrzeugführer in der jeweils aktuellen, also der dann erreichten, Gefahrensituation die Kontrolle über das Kraftfahrzeug erfolgreich übernommen hat und/oder sobald sich das Kraftfahrzeug nicht mehr in der jeweils aktuellen Gefahrensituation befindet. Die Insassenüberwachung kann beispielsweise die im Zusammenhang mit dem Erfassen der Zustandsdaten und dem Bestimmen oder Ermitteln des Zustands des Fahrzeugführers beschriebenen Systeme, Sensoren und dergleichen oder eine Auswahl daraus umfassen. Es ist bei dieser Ausgestaltung der vorliegenden Erfindung vorgesehen, die Insassenüberwachung nur zeitweise, also nur bei Bedarf, zu aktivieren. Der Fahrzeugführer und/oder weitere sich gegebenenfalls in dem Kraftfahrzeug befindende Insassen werden also nicht permanent überwacht. Fährt das Kraftfahrzeug beispielsweise autonom auf einer von Verkehr, Baustellen, Hindernissen und dergleichen, also von Gefahrenstellen oder Gefahrensituationen freien, geraden Autobahn und ist für das Assistenzsystem also keine voraussichtlich innerhalb der nächsten beispielsweise 30 Minuten ab einem aktuellen Zeitpunkt auftretende oder erreicht werdende Gefahrensituation erkennbar, so ist zu dem aktuellen Zeitpunkt eine Insassenüberwachung zur Bestimmung des Fahrerzustands nicht notwendig und kann daher abgeschaltet werden oder bleiben. Auf diese Weise kann vorteilhaft die Privatsphäre des Fahrzeugführers so gut gewahrt werden wie es zur Wahrung der Sicherheit vertretbar ist. Damit kann wiederum vorteilhaft eine Akzeptanz des Assistenzsystems bei dem Fahrzeugführer und/oder anderen tatsächlichen oder potentiellen Nutzern gesteigert werden, was - zumindest mittelfristig oder indirekt - ebenfalls zu einer gesteigerten Sicherheit im Straßenverkehr beitragen kann, da entsprechende Assistenzsysteme so weitere Verbreitung finden können und/oder mit größerer Wahrscheinlichkeit aktiviert werden oder bleiben.

Der vorgegebene Maximalabstand kann beispielsweise bestimmt sein durch eine größtmögliche oder größte vorgesehene mögliche voraussichtliche Übernahmezeit. Der Maximalabstand kann dabei als fixer Wert vorgegeben sein oder dynamisch angepasst werden, beispielsweise in Abhängigkeit von einem aktuellen Betriebszustand des Infotainmentsystems, also einer aktuell von dem Fahrzeugführer genutzten Funktion und/oder einem aktuell von dem Fahrzeugführer genutzten Inhalt. Dieser Betriebszustand kann dabei insbesondere offensichtlich ohne Einsatz oder Verwendung der Fahrerbeobachtungskamera ermittelt werden. Dass oder ob das Kraftfahrzeug die aktuelle Gefahrensituation verlassen hat, kann beispielsweise anhand der jeweils aktuellen Situationsdaten bestimmt werden. Ebenso kann ein zeitlicher und/oder räumlicher Minimalabstand vorgegeben sein, bis zu dem sich das Kraftfahrzeug von der Gefahrensituation mindestens entfernt haben muss, bevor die Insassenüberwachung automatisch beendet wird oder manuell beendet werden kann.

In weiterer vorteilhafter Ausgestaltung der vorliegenden Erfindung werden Zustandsdaten, die einen Zustand des Fahrzeugführers charakterisieren, erfasst. Dabei kann es sich insbesondere um die hierin bereits an anderer Stelle beschriebenen Zustandsdaten handeln. In Abhängigkeit von den erfassten Zustandsdaten, insbesondere in Abhängigkeit von dem anhand dieser ermittelten Zustand des Fahrzeugführers, wird dann ein jeweiliger Wert wenigstens eines zum automatisierten, insbesondere zum autonomen, Führen oder Betreiben des Kraftfahrzeugs verwendeten Parameters angepasst. Mit anderen Worten kann also ein Fahr- oder Betriebsmodus des Kraftfahrzeugs an einen jeweils aktuellen Zustand des Fahrzeugführers angepasst werden. Wird beispielsweise ermittelt, dass der Fahrzeugführer müde und/oder abgelenkt ist, so kann beispielsweise eine Maximalgeschwindigkeit, mit der sich das Kraftfahrzeug autonom bewegt, reduziert werden. Hierdurch kann die dem Fahrzeugführer zur Übernahme der Kontrolle über das Kraftfahrzeug zur Verfügung stehende Zeit vergrößert werden, insbesondere entsprechend der von dem Fahrzeugführer aufgrund seines Zustands voraussichtlich benötigten längeren Übernahmezeit. Ebenso kann beispielsweise ein von dem Kraftfahrzeug autonom eingehaltener Sicherheitsabstand in Abhängigkeit von dem Fahrerzustand, also in Abhängigkeit von den erfassten Zustandsdaten, angepasst werden. Besonders vorteilhaft kann ebenso eine Routenführung oder eine Streckenauswahl in Abhängigkeit von den Zustandsdaten angepasst werden. Wird beispielsweise erfasst, dass der Fahrzeugführer müde oder alkoholisiert ist oder einer gesundheitlichen Einschränkung unterliegt, so kann das Fahrzeug autonom eine Route auswählen, welche eine geringere Wahrscheinlichkeit dafür aufweist, dass das Kraftfahrzeug in eine Gefahrensituation, also eine Situation, in der der Fahrzeugführer die Kontrolle über das Kraftfahrzeug übernehmen muss oder müsste, gerät. So können beispielsweise bekannte Unfallschwerpunkte, Innenstadtbereiche, Bereiche mit ungewöhnlicher oder geänderter Verkehrsführung oder dergleichen durch automatische Auswahl einer Alternativroute vermieden werden. Dies kann vorteilhaft zu einer erhöhten Sicherheit beitragen, wobei gleichzeitig das Angebot von Funktionen und/oder Inhalten des Infotainmentsystems weniger häufig oder mit geringerer Wahrscheinlichkeit eingeschränkt werden muss, sodass sich auch ein erhöhter Komfort für den Fahrzeugführer ergibt.

In weiterer vorteilhafter Ausgestaltung der vorliegenden Erfindung wird eine Vertrauenseinstufung anderer Verkehrsteilnehmer, insbesondere basierend auf einem jeweiligen Fahrmodus und/oder Personenzustand, und/oder eine Vertrauenseinstufung von weiteren Insassen des Kraftfahrzeugs vorgenommen. Diese Vertrauenseinstufung oder Vertrauenseinstufungen werden dann berücksichtigt bei der Bestimmung des Zeitpunktes, zu dem das Kraftfahrzeug voraussichtlich in die Gefahrensituation geraten wird, und/oder bei dem Anpassen des Angebots von Funktionen und/oder Inhalten. Mit anderen Worten kann also nicht nur eine extern erkennbare Istsituation - beispielsweise beschrieben durch die jeweiligen Positionen und Geschwindigkeiten der anderen Verkehrsteilnehmer in der Umgebung des Kraftfahrzeugs - berücksichtigt werden, sondern die anderen Verkehrsteilnehmer können zusätzlich bewertet werden. Diese zusätzliche Bewertung oder Vertrauenseinstufung der anderen Verkehrsteilnehmer kann vorteilhaft bei einer Voraussage einer zukünftig eintretenden Verkehrssituation oder bei einer Extrapolation oder Bewertung der aktuellen Verkehrssituation verwendet werden, wodurch sich eine reale Entwicklung mit höherer Genauigkeit, Wahrscheinlichkeit oder Zuverlässigkeit bestimmen lässt. Die jeweilige Vertrauenseinstufung kann also beispielsweise angeben, wie berechenbar der jeweilige Verkehrsteilnehmer oder dessen Verhalten ist. Dem jeweiligen Verkehrsteilnehmer kann ein Vertrauenswert zugeordnet werden, der aus mehreren Einzeldaten oder -faktoren zusammengesetzt oder berechnet sein oder werden kann.

Die Vertrauenseinstufung eines anderen Verkehrsteilnehmers kann sich jeweils auf ein Fahrzeug und/oder eine Person beziehen. Um die Vertrauenseinstufung vorzunehmen kann beispielsweise der Fahrmodus des jeweiligen Verkehrsteilnehmers berücksichtigt werden. Hier kann beispielsweise unterschieden werden, ob sich das jeweilige Fahrzeug automatisch, also autonom bewegt und dabei mit aktuellster Hard- und Software nach dem jeweils verfügbaren Stand der Technik ausgestattet ist, ob das Fahrzeug sich autonom bewegt und dabei veraltete Hard- und/oder Software aufweist, ob das Fahrzeug von einem menschlichen Fahrer manuell geführt oder gesteuert wird, der keinerlei Einschränkungen hinsichtlich seines Zustands unterliegt oder ob das Fahrzeug manuell von einem menschlichen Fahrer gesteuert wird, der sich in einem Zustand mit Einschränkungen, beispielsweise bezüglich seiner Aufmerksamkeit oder seiner Gesundheit oder seiner Fähigkeiten, befindet. Der Zustand des jeweiligen Fahrers oder Führers des fremden Fahrzeugs, also des anderen Verkehrsteilnehmers, kann beispielsweise in dem jeweiligen Fahrzeug analog zum Zustand des Fahrzeugführers des eigenen Kraftfahrzeugs bestimmt werden.

Zusätzlich oder alternativ kann beispielsweise ein jeweiliges Zertifikat für das fremde Fahrzeug und/oder dessen Fahrer oder Insassen vorgesehen sein. Derartige Zertifikate können beispielsweise einen Funktionsumfang, Funktionsstatus, Reparaturzustand und dergleichen für das jeweilige Fahrzeug angeben. Für den jeweiligen Fahrer oder Insassen kann ein Zertifikat beispielsweise dessen Erfahrung angeben, das heißt, ob es sich beispielsweise um einen Fahranfänger oder einen Berufsfahrer mit mehrjähriger Erfahrung handelt. Ebenso kann beispielsweise angegeben sein, welche Strecke, also beispielsweise wie viele Kilometer auf welchen Straßentypen, der jeweilige Fahrer bereits, insbesondere unfallfrei, zurückgelegt hat.

Die für die Vertrauenseinstufung verwendeten oder verwendbaren Daten oder der dem jeweiligen Verkehrsteilnehmer zugeordnete Vertrauenswert können beispielsweise mittels Car2Car- oder X2Car-Kommunikation von dem Verkehrsteilnehmer an das eigene Kraftfahrzeug übermittelt werden. Zusätzlich oder alternativ kann eine indirekte Kommunikation oder Datenübermittlung mittels einer externen Servereinrichtung, beispielsweise eines Cloud-Servers vorgesehen sein. Hierdurch kann gegebenenfalls vorteilhaft ein größerer Datensatz verwaltet werden und/oder eine gebündelte Datenübertragung erfolgen. Es kann besonders vorteilhaft vorgesehen sein, dass die Verkehrsteilnehmer für die Vertrauenseinstufung verwendbaren Daten an die Servereinrichtung übermitteln und diese daraus einen jeweiligen Vertrauenswert berechnet. Dadurch kann vorteilhaft eine Anonymisierung der Daten erfolgen. Da es letztlich ausreichen kann zu wissen, ob sich in der Umgebung des Kraftfahrzeugs ein als wenig oder nicht vertrauenswürdiger Verkehrsteilnehmer - also ein Verkehrsteilnehmer, dessen Vertrauenseinstufung oder dessen zugeordneter Vertrauenswert kleiner als ein vorgegebener Schwellenwert ist - befindet, um zu bestimmen, ob sich das Kraftfahrzeug in einer Gefahrensituation befindet oder voraussichtlich in eine Gefahrensituation geraten wird, kann dennoch die Sicherheit beim Betrieb des Kraftfahrzeugs gewahrt werden, obwohl dem Kraftfahrzeug oder dessen Assistenzsystem keine detaillierten Daten über die anderen Verkehrsteilnehmer vorliegen.

Ebenso können zum Bestimmen und/oder Plausibilisieren der jeweiligen Vertrauenseinstufung oder des jeweiligen Vertrauenswertes eigene Sensordaten des Kraftfahrzeugs berücksichtigt werden. Diese Sensordaten können beispielsweise eine jeweilige Trajektorie und/oder ein jeweiliges Geschwindigkeitsprofil des jeweiligen anderen Verkehrsteilnehmers beschreiben.

Insgesamt kann beispielsweise einem Verkehrsteilnehmer, bei dem es sich um einen Verkehrsteilnehmer mit eingeschränktem Gesundheitszustand handelt und/oder der sein Fahrzeug in Schlangenlinien oder beispielsweise mit häufigen oder ruckartigen Korrekturen bewegt, eine relativ geringe Vertrauenseinstufung, also beispielsweise ein unterhalb des vorgegebenen Schwellenwertes liegender Vertrauenswert, zugeordnet werden. Demgegenüber kann beispielsweise einem mit aktueller Hard- und Software ausgestatteten, autonom geführten Fahrzeug mit einem erfahrenen und aufmerksamen Führer eine relativ hohe Vertrauenseinstufung - beispielsweise oberhalb des oder eines weiteren vorgegebenen Schwellenwertes liegend - zugeordnet werden.

In Abhängigkeit von den Vertrauenseinstufungen der sich in der Umgebung, beispielsweise in einem vorgegebenen Radius, um das Kraftfahrzeug befindlichen Verkehrsteilnehmer kann das Assistenzsystem bestimmen, ob sich das Kraftfahrzeug in einer Gefahrensituation befindet und/oder wann es voraussichtlich in eine Gefahrensituation geraten wird. Hierfür kann beispielsweise eine Gewichtung oder Bewertung eines oder mehrerer Parameter der aktuellen Situation oder Situationsdaten angepasst werden. So kann beispielsweise eine Situation, in der sich ein anderer Verkehrsteilnehmer mit einer bestimmten Geschwindigkeit bewegt, insbesondere sich dem Kraftfahrzeug oder einem dritten Verkehrsteilnehmer nähert, als Gefahrensituation oder als zu einer Gefahrensituation führend eingestuft werden, wenn dem sich nähernden Verkehrsteilnehmer eine relativ geringe Vertrauenseinstufung zugeordnet ist. Demgegenüber kann die - äußerlich identische - Situation als Standard- oder Nicht-Gefahrensituation eingestuft oder als voraussichtlich nicht zu einer Gefahrensituation führend eingestuft werden, wenn es sich bei dem sich nähernden Verkehrsteilnehmer um ein aktuell ausgestattetes autonom geführtes Fahrzeug handelt, da dann mit größerer Wahrscheinlichkeit davon ausgegangen werden kann, dass das eigene Kraftfahrzeug und/oder der dritte Verkehrsteilnehmer nicht übersehen wurden. Entsprechend kann das Angebot von Funktionen und/oder Inhalten in Abhängigkeit von der Vertrauenseinstufung oder den Vertrauenseinstufung und der sich in der Umgebung des Kraftfahrzeugs befindlichen Verkehrsteilnehmer, beispielsweise in Abhängigkeit von einer ermittelten minimalen Vertrauenseinstufung, angepasst werden. Befindet sich beispielsweise ein Verkehrsteilnehmer mit einer unterhalb des vorgegebenen Schwellenwertes liegenden Vertrauenseinstufung in der Umgebung des Kraftfahrzeugs, so kann das Angebot eingeschränkt werden, um zu erreichen, dass der Fahrzeugführer die Kontrolle über das Kraftfahrzeug schneller, also in oder mit kürzerer Übernahmezeit, übernehmen kann. Insgesamt kann durch das Vornehmen und Berücksichtigen der Vertrauenseinstufung der anderen Verkehrsteilnehmer die Sicherheit beim Führen oder Betreiben des Kraftfahrzeugs erhöht werden.

Analog zur Vertrauenseinstufung der anderen Verkehrsteilnehmer kann ebenso eine Vertrauenseinstufung des Fahrzeugführers und/oder weiterer Insassen des Kraftfahrzeugs vorgenommen und entsprechend berücksichtigt werden. Beispielsweise kann in dem Kraftfahrzeug befindlichen Kindern ein relativ niedrigerer Vertrauenswert, also eine relativ niedrigere Vertrauenseinstufung, zugewiesen werden als beispielsweise einem, insbesondere beispielsweise schlafenden oder anderweitig eigenständig beschäftigten - Erwachsenen, wodurch vorteilhaft berücksichtigt werden kann, dass die Kinder den Fahrzeugführer mit höherer Wahrscheinlichkeit ablenken können.

In weiterer vorteilhafter Ausgestaltung der vorliegenden Erfindung wird zusätzlich regelmäßig unabhängig von einer erkannten oder prognostizierten Gefahrensituation das Angebot von Funktionen und/oder Inhalten in Abhängigkeit von einer voraussichtlichen Restdauer bis zum Erreichen eines jeweils aktuellen Fahrtziels des Kraftfahrzeugs automatisch angepasst. Mit anderen Worten wird also bestimmt, wie lange das Kraftfahrzeug gemäß aktuell verfügbarer Navigationsdaten noch bis zum Erreichen des Fahrtziels unterwegs sein wird. In Abhängigkeit hiervon können dann die Funktionen und/oder Inhalte bestimmt werden, die für diese voraussichtliche Restdauer, also verbleibende Fahrzeit, geeignet oder nicht geeignet sind. Beispielsweise kann bei einer verbleibenden Restdauer von voraussichtlich 15 Minuten ein Film mit einer Länge oder Spielzeit von zwei Stunden und/oder die Funktion zur Wiedergabe eines solchen Filmes als ungeeignet für die verbleibende aktuelle Restdauer eingestuft werden. Das Anpassen des Angebots kann dann bedeuten, dass als ungeeignet eingestufte Funktionen und/oder Inhalte - also beispielsweise solche, die eine Zeitdauer benötigen, die länger ist als die verbleibende Restzeit oder Restdauer - unzugänglich gemacht werden, dem Fahrzeugführer also nicht zur Nutzung bereitgestellt werden. Zusätzlich oder alternativ kann das Anpassen bedeuten, dass die entsprechenden Funktionen und/oder Inhalte mit einem Hinweis oder einer Warnung für den Fahrzeugführer versehen oder gekoppelt werden, welche dem Fahrzeugführer ausgegeben wird, wenn er versucht, die entsprechenden, also die als ungeeignet eingestuften Funktionen und/oder Inhalte zu nutzen. Hierdurch kann ebenfalls der Komfort für den Fahrzeugführer gesteigert werden, da vorteilhaft verhindert wird, dass er die Nutzung einer Funktion und/oder eines Inhaltes unerwartet oder ungewollt unterbrechen muss, wenn oder weil das Kraftfahrzeug das jeweils aktuelle Fahrtziel erreicht hat. Besonders vorteilhaft kann ebenso regelmäßig automatisch eine Vorhersage dazu berechnet oder durchgeführt werden, wie das Angebot zu einem bestimmten zukünftigen Zeitpunkt, beispielsweise in 5, 10, 15 und/oder 30 Minuten aussehen soll, das heißt welche Funktionen und/oder Inhalte das Angebot zu diesem Zeitpunkt oder zu diesen Zeitpunkten umfassen soll. Für diese Vorhersage, das heißt zum Bestimmen, Berechnen oder Durchführen der Vorhersage, können beispielsweise die Situationsdaten, die Zustandsdaten für den Zustand des Fahrzeugführers, Daten für eine Vertrauenseinstufung, Navigations- oder Routendaten, von anderen Verkehrsteilnehmern und/oder von einer externen Servereinrichtung empfangene Daten, Wetterinformationen und dergleichen mehr verwendet oder berücksichtigt werden.

In weiterer vorteilhafter Ausgestaltung der vorliegenden Erfindung wird das Kraftfahrzeug automatisch gestoppt, also angehalten, wenn ermittelt wird, dass die voraussichtliche Übernahmezeit länger ist als eine Zeitdauer bis zum Erreichen der Gefahrensituation. Mit anderen Worten wird also ermittelt, ob der Fahrzeugführer voraussichtlich rechtzeitig die Kontrolle über das Kraftfahrzeug übernehmen kann, bevor das Kraftfahrzeug in die Gefahrensituation gerät. Die Zeitdauer bis zum Erreichen der Gefahrensituation entspricht also der Zeitspanne zwischen einem jeweils aktuellen Zeitpunkt und dem ermittelten Zeitpunkt, zu dem das Kraftfahrzeug autonom fahrend voraussichtlich in die Gefahrensituation geraten wird. Dieses Vorgehen ermöglicht vorteilhaft eine besonders vorausschauende und damit besonders sichere autonome Führung des Kraftfahrzeugs.

Beispielsweise kann die Übernahmezeit länger sein als eine Zeitdauer, die benötigt wird, um das Kraftfahrzeug aus seinem aktuellen Fahrzustand mit maximal möglicher Verzögerung zum Stillstand zu bringen. Wird ermittelt, dass die voraussichtliche Übernahmezeit länger ist als die Zeitdauer bis zum Erreichen der Gefahrensituation, kann bereits dann damit begonnen werden, das Kraftfahrzeug abzubremsen. Durch das Berücksichtigen der Übernahmezeit kann dabei eine geringere und damit sicherere Bremskraft oder Bremsbeschleunigung aufgebracht oder eingesetzt werden als bei einer zu einem für ein Anhalten vor der Gefahrensituation letztmöglichen Zeitpunkt eingeleiteten Notbremsung, um das Kraftfahrzeug vor der Gefahrensituation zu stoppen. Dadurch kann sich eine zuverlässigere Längs- und Querführung des Kraftfahrzeugs ebenso ergeben wie eine reduzierte Gefährdung anderer Verkehrsteilnehmer und zusätzlich ein erhöhter Insassenkomfort.

Es kann vorteilhaft sein, wenigstens einen weiteren Schwellenwert für das Gefahrenpotenzial der jeweiligen Situation oder Gefahrensituation vorzugeben. Mit Erreichen oder Überschreiten eines unteren der Schwellenwerte kann die jeweilige Situation also als Gefahrensituation eingestuft werden. Ist dabei das Gefahrenpotenzial geringer als ein oberer der Schwellenwerte, so kann es vorgesehen sein, die Geschwindigkeit des Kraftfahrzeugs lediglich so weit zu reduzieren, dass die Zeitdauer bis zum Erreichen der Gefahrensituation wenigstens so lang ist wie die Übernahmezeit. Erreicht oder überschreitet das Gefahrenpotenzial der jeweiligen Situation jedoch den oberen Schwellenwert, so kann es vorgesehen sein, das Kraftfahrzeug in jedem Fall vollständig zu stoppen, also zum Stillstand zu bringen, um dem Fahrzeugführer genügend Zeit zu geben, die vorliegende Gefahrensituation zu erfassen. Gefahrensituationen mit einem derartigen, auf Höhe oder oberhalb des oberen Schwellenwertes liegenden Gefahrenpotenzial können beispielsweise Situationen sein, in denen in Fahrtrichtung des Kraftfahrzeugs für das Assistenzsystem oder das Kraftfahrzeug keine freie Fahrbahn oder Fahrgasse erkennbar ist, die Fahrbahn oder die Straße also beispielsweise über ihre gesamte Breite blockiert erscheint.

Ebenso kann es vorteilhaft vorgesehen sein, dass die Geschwindigkeit des Kraftfahrzeugs automatisch reduziert wird - also beispielsweise das Assistenzsystem ein entsprechendes Daten- oder Steuersignal erzeugt und an ein Fahrzeugführungssystem aussendet - wenn das Angebot oder eine aktuelle Wiedergabe und/oder eine aktuell genutzte Funktion des Infotainmentsystems nicht vor dem ermittelten Zeitpunkt, zu dem das Kraftfahrzeug die Gefahrensituation voraussichtlich erreicht, beendet werden kann. Hierdurch kann vorteilhaft vermieden werden, dass der Fahrzeugführer in die Gefahrensituation gerät, während er noch durch das Infotainmentsystem oder eine Nutzung des Infotainmentsystems abgelenkt ist. Zumindest kann eine Zeitdauer reduziert oder minimiert werden, die das Kraftfahrzeug nach dem Erreichen der Gefahrensituation ohne Eingriff oder Reaktion des Fahrzeugführers, insbesondere stillstehend, verbringt.

In derartigen Situationen, beispielsweise bei einem die jeweilige Straße oder Fahrbahn blockierenden Unfall oder Hindernis, ist voraussichtlich für den Fahrzeugführer eine überdurchschnittlich lange Zeit notwendig, um ein korrektes Verhalten zu bestimmen. Es kann dabei vorgesehen sein, dass zur Nutzung bereitgestellte Angebot von Funktionen und/oder Inhalten in solchen Situationen aufgrund des Gefahrenpotenzials anzupassen, insbesondere auf ein Minimum zu beschränken oder zu reduzieren. Ebenso kann es jedoch vorgesehen sein, nach dem Stopp des Kraftfahrzeugs beispielsweise das volle Angebot von Funktionen und/oder Inhalten zur Nutzung bereitzustellen, da dann nicht mehr die Gefahr besteht, dass sich das Kraftfahrzeug autonom der Gefahrensituation weiter annähert, sich also in Gefahr bringt. Es kann vorteilhaft sein, hierfür zusätzlich einen Hinweis an den Fahrzeugführer oder eine notwendige Bestätigung des Fahrzeugführers vorzusehen, mit der er bestätigt, dass er sich der Gefahrensituation, die zum Stoppen des Kraftfahrzeugs geführt hat, bewusst ist. So kann vorteilhaft auf sichere Weise für einen verbesserten Komfort das maximale Angebot zur Nutzung bereitgestellt werden, wenn das Kraftfahrzeug beispielsweise aufgrund der Gefahrensituation - etwa bei einer aufgrund eines Unfalls temporär gesperrten Straße - seine Fahrt weder autonom noch von dem Fahrzeugführer manuell gesteuert fortsetzen kann.

In vorteilhafter Weiterbildung der vorliegenden Erfindung werden Zustandsdaten, die einen Zustand des Fahrzeugführers charakterisieren, erfasst. Dabei kann es sich insbesondere um die hierin bereits an anderer Stelle genannten Zustandsdaten handeln. Es wird dann, beispielsweise ebenfalls von dem Assistenzsystem, durch Verarbeiten der erfassten Zustandsdaten ermittelt, ob sich der Fahrzeugführer in einem fahrtüchtigen Zustand befindet. Wenn dabei ermittelt wurde, dass sich der Fahrzeugführer nicht in einem fahrtüchtigen Zustand befindet, sich also in einem fahruntüchtigen Zustand befindet, wird bei aufgrund der Gefahrensituation automatisch gestopptem Kraftfahrzeug automatisch eine vorbestimmte Kontaktperson des Fahrzeugführers informiert und/oder ein Personenbeförderungsdienst mit einem Weitertransport des Fahrzeugführers von der aktuellen Position, also einem aktuellen Standort des Kraftfahrzeugs beauftragt. Beispielsweise kann sich der Fahrzeugführer in einem fahruntüchtigen Zustand befinden, wenn er verletzt oder alkoholisiert ist. Ist der Fahrzeugführer also dementsprechend nicht in der Lage, das Kraftfahrzeug selbstständig zu führen, also aus der Gefahrensituation hinaus zu bewegen, so kann beispielsweise automatisch ein Taxi gerufen werden, sodass der Fahrzeugführer dennoch sein Ziel sicher erreichen kann. In einer derartigen Situation, also beispielsweise während auf das Taxi gewartet wird, kann das Angebot von Funktionen und/oder Inhalten dahingehend angepasst werden, dass sämtliche Funktionen und oder Inhalte dem Fahrzeugführer zur Nutzung bereitstehen.

In weiterer vorteilhafter Ausgestaltung der vorliegenden Erfindung wird eine Übernahmeaufforderung an den Fahrzeugführer ausgegeben, die den Fahrzeugführer dazu auffordert, die Kontrolle über das Kraftfahrzeug zu übernehmen. Es wird dann ein Verhalten des Fahrzeugführers zwischen dem Ausgeben der Übernahmeaufforderung und einem tatsächlichen Übernehmen der Kontrolle durch den Fahrzeugführer erfasst. Dies kann ganz oder teilweise wie das Erfassen oder analog zu dem Erfassen der Zustandsdaten erfolgen, die den Zustand des Fahrzeugführers charakterisieren. Es kann also beispielsweise ein Insassenüberwachungssystem, eine Fahrerbeobachtungskamera oder dergleichen ebenso verwendet werden wie beispielsweise fahrzeugeigene Sensoren oder Sensordaten ausgewertet werden können. In Abhängigkeit von dem erfassten Verhalten wird dann eine Datengrundlage für ein zukünftiges Anpassen des Angebots von Funktionen und/oder Inhalten für ein zukünftiges Ermitteln der Übernahmezeit angepasst. Mit anderen Worten können also durch das Erfassen des Verhaltens des individuellen Fahrzeugführers, insbesondere im Laufe der Zeit mit zunehmender Genauigkeit, individuelle Eigenschaften des Fahrzeugführers ermittelt werden, die für die von diesem individuellen Fahrzeugführer tatsächlich, insbesondere in verschiedenen Situationen, benötigte Übernahmezeit relevant sind. Dies kann beispielsweise eine typische Reaktionsgeschwindigkeit sein oder vorteilhaft eine abhängig von einer jeweils genutzten Funktion und/oder abhängig von einem jeweils genutzten Inhalt tatsächlich von dem Fahrzeugführer benötigte Übernahmezeit.

Aus dem beobachteten Verhalten können ebenso gegebenenfalls körperliche Einschränkungen des Fahrzeugführers abgeleitet werden. Weist beispielsweise der Fahrzeugführer an einem Arm eine körperliche Behinderung oder einen eingeschränkten Bewegungsumfang auf, so kann er eine bestimmte Bedienhandlung, wie etwa ein Abnehmen eines Head-Mounted Displays oder dergleichen, stets auf eine bestimmte Art und Weise ausführen und hierfür eine Zeitdauer benötigen, die länger ist als eine für einen durchschnittlichen Nutzer veranschlagte oder vorgegebene, angenommene Standardzeitdauer. Dies kann durch das Erfassen des Verhaltens des Fahrzeugführers automatisch erkannt werden. Mit anderen Worten kann also ein für das erfindungsgemäße Verfahren eingesetzter Algorithmus oder ein für das erfindungsgemäße Verfahren eingesetztes Assistenzsystem selbstlernend ausgebildet sein. So kann die, beispielsweise herstellerseitig bereitgestellte und zunächst für einen angenommenen Standardnutzer konfigurierte, Datenbasis an den individuellen Fahrzeugführer angepasst werden, beispielsweise indem entsprechende, in der Datengrundlage enthaltene Werte für für bestimmte Handlungen benötigte Zeiten in Abhängigkeit von dem erfassten Verhalten erhöht oder erniedrigt werden. Hierdurch kann vorteilhaft die Sicherheit erhöht werden, da die ermittelte voraussichtliche Übernahmezeit besser mit der von dem jeweiligen individuellen Fahrzeugführer tatsächlich benötigten Übernahmezeit übereinstimmt. Dies kann vorteilhaft auch zu einem erhöhten Komfort des Fahrzeugführers führen, da dieser beispielsweise nicht durch eine zu kurz angesetzte voraussichtliche Übernahmezeit unter Zeitdruck gesetzt wird oder unnötig lange vor dem Erreichen der Gefahrensituation zur Übernahme der Kontrolle aufgefordert wird.

Auch hierbei kann zunächst ermittelt werden, ob der Fahrer sich in einem fahrtüchtigen Zustand befindet. Ist dies nicht der Fall, so kann die vorgesehene oder geplante Ausgabe der Übernahmeaufforderung unterdrückt werden. Das Kraftfahrzeug kann dann, beispielsweise mit einem erklärenden oder erläuternden Hinweis, automatisch gestoppt werden.

In jedem Fall kann es vorteilhaft sein, als Teil der Übernahmeaufforderung weitere Informationen an den Fahrzeugführer auszugeben. Dies kann beispielsweise eine kurze Begrüßung, eine Beschreibung und/oder Einschätzung - beispielsweise hinsichtlich der aktuellen Position, der Verkehrslage, des Wetters und dergleichen - der aktuellen Situation, ein Grund für die Übernahme, eine Aufgabenbeschreibung, die dem Fahrzeugführer erläutert, was von ihm erwartet oder verlangt wird, und/oder gegebenenfalls eine Fehlermeldung sein oder umfassen. Hierdurch kann eine graduelle Hinführung des Fahrzeugführers zu der jeweiligen Situation und den von ihm auszuführenden Maßnahmen erreicht werden, was vorteilhaft zu einem reduzierten Stressniveau für den Fahrzeugführer und zu einer verbesserten Sicherheit führen kann. Durch die Übernahmeaufforderung kann der Fahrzeugführer also auf eine bevorstehende Fahraufgabe vorbereitet werden. Die Übernahmeaufforderung kann beispielsweise in akustischer und/oder visueller Form, insbesondere mittels des Infotainmentsystems, ausgegeben werden.

Ein erfindungsgemäßes Kraftfahrzeug weist eine Sensorik zum Erfassen von Situationsdaten, die eine Situation des Kraftfahrzeugs charakterisieren, sowie ein mit dieser Sensorik gekoppeltes Assistenzsystem und ein Infotainmentsystem auf. Das Assistenzsystem ist dazu eingerichtet, die Situationsdaten automatisch zu verarbeiten und dadurch einen Zeitpunkt zu ermitteln, zu dem das Kraftfahrzeug autonom fahrend voraussichtlich in eine Gefahrensituation geraten wird. Die Gefahrensituation ist dadurch gekennzeichnet, dass sie ein oberhalb eines vorgegebenen Schwellenwertes liegendes Gefahrenpotenzial aufweist. Das Assistenzsystem ist zudem dazu eingerichtet, durch Ansteuern des Infotainmentsystems ein dem Fahrzeugführer zur Nutzung bereitgestelltes Angebot von Funktionen und/oder Inhalten des Infotainmentsystems anzupassen in Abhängigkeit von dem ermittelten Zeitpunkt und basierend auf einer vorgegebenen Klassifikation aller Funktionen und/oder Inhalte des Infotainmentsystems hinsichtlich ihres jeweiligen Einflusses auf eine Übernahmezeit, die der Fahrzeugführer voraussichtlich zur Übernahme einer Kontrolle über das Kraftfahrzeug benötigt. Mit anderen Worten kann das Kraftfahrzeug also dazu eingerichtet sein, wenigstens eine Ausführungsform oder Variante des erfindungsgemäßen Verfahrens durchzuführen. Entsprechend kann das Kraftfahrzeug weitere Sensoren, eine Kommunikationseinrichtung zur Kommunikation mit anderen Fahrzeugen, Verkehrsteilnehmern und/oder einer externen Servereinrichtung, ein Insassenüberwachungssystem, beispielsweise mit einer Fahrerbeobachtungskamera, und/oder weitere benötigte Bauteile, Komponenten oder Systeme aufweisen.

Als weiterer Aspekt der vorliegenden Erfindung kann es vorgesehen sein, mittels des Assistenzsystems aufmerksamkeitserhöhende Maßnahmen durchzuführen, um beispielsweise eine durchschnittlich von dem Fahrzeugführer benötigte Übernahmezeit zu reduzieren. Aufmerksamkeitserhöhende Maßnahmen in diesem Sinne können von dem Assistenzsystem beispielsweise automatisch vorgenommen oder durchgeführt werden, wenn - etwa mittels der Insassenbeobachtung oder -überwachung - festgestellt wird, dass die Aufmerksamkeit des Fahrzeugführers nachlässt. Die aufmerksamkeitserhöhenden Maßnahmen können dazu ausgelegt sein, den Fahrzeugführer zu engagieren, ihn beispielsweise wach zu halten. Als aufmerksamkeitserhöhende Maßnahme kann beispielsweise eine Frage direkt an den Fahrzeugführer gerichtet werden, beispielsweise "Wie fühlst du dich?" Ebenso kann als aufmerksamkeitserhöhende Maßnahme beispielsweise ein Gespräch mit dem Fahrzeugführer eingeleitet werden, wobei vorteilhaft beispielsweise auf einen Inhalt einer vorherigen Unterhaltung und/oder eine von dem Fahrzeugführer empfangene oder gesendete Nachricht Bezug genommen werden kann. Als Gesprächsbeginn kann beispielsweise eine Frage nach einer dem Fahrzeugführer bekannten Person gestellt werden, etwa "Ach, wie war das noch gleich mit deiner Mutter / deinem Bruder / deinem Freund?" Als aufmerksamkeitserhöhende Maßnahme kann dem Fahrzeugführer ebenso beispielsweise eine zu lösende Aufgabe, beispielsweise eine Mathematikaufgabe, eine Quizfrage oder dergleichen, gestellt werden.

Besonders vorteilhaft kann dann eine Reaktion oder Antwort des Fahrzeugführers erfasst und ausgewertet werden. Dies kann zur Ermittlung des Zustands des Fahrzeugführers verwendet werden. Wird die Reaktion oder Antwort des Fahrzeugführers, beispielsweise anhand vorgegebener Kriterien oder Zuordnungen, als in Ordnung eingestuft, so kann der Fahrzeugführer weiter im Gespräch gehalten werden, um auch weiterhin zu verhindern, dass seine Aufmerksamkeit nachlässt. Besonders vorteilhaft können die aufmerksamkeitserhöhenden Maßnahmen für den Fahrzeugführer nützliche Maßnahmen sein oder umfassen, beispielsweise ein interaktives Erstellen einer Aufgaben- oder Einkaufsliste. Wird hingegen die Reaktion oder Antwort des Fahrzeugführers als nicht in Ordnung eingestuft, so kann beispielsweise ein Vorschlag zum Einlegen einer Pause, zum Trinken eines Kaffees und/oder zum Nutzen einer bestimmten Funktionalität des Infotainmentsystems oder dergleichen ausgegeben werden. Insgesamt kann durch die Aufmerksamkeitserhöhenden Maßnahmen die Sicherheit verbessert werden. Ebenso können sie zur Steigerung des Komforts des Fahrzeugführers beitragen, da beispielsweise vermieden werden kann, dass dieser sich langweilt.

Zu der Erfindung gehören auch Weiterbildungen des erfindungsgemäßen Kraftfahrzeugs, die Merkmale und/oder Vorteile aufweisen, wie sie im Zusammenhang mit den Weiterbildungen des erfindungsgemäßen Verfahrens beschrieben sind und umgekehrt. Aus diesem Grund sind diese Weiterbildungen des erfindungsgemäßen Kraftfahrzeugs beziehungsweise des erfindungsgemäßen Verfahrens hier nicht noch einmal einzeln explizit beschrieben.

Im Folgenden sind Ausführungsbeispiele der Erfindung beschrieben. Hierzu zeigt:
- Fig. 1: in einer schematischen und ausschnittweisen Draufsicht eine Verkehrssituation, in der sich ein Kraftfahrzeug einer Gefahrensituation mit einer geänderten Verkehrsführung nähert ;
- Fig. 2: einen beispielhaften schematischen Ablaufplan eines Verfahrens zum Betreiben eines Assistenzsystems eines Kraftfahrzeugs.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten oder beschriebenen Kombination als Bestandteil der Erfindung anzusehen sind. Des Weiteren sind die beschriebenen Ausführungsformen auch durch weitere der bereits beschriebenen Merkmale der Erfindung ergänzbar.

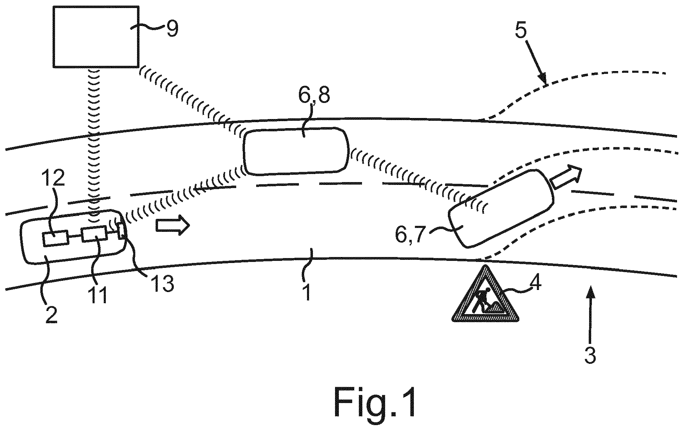

Fig. 1 zeigt eine schematische und ausschnittweise Draufsicht auf eine Verkehrssituation. In dieser - nicht maßstabsgetreu dargestellten - Verkehrssituation fährt auf einem Straßenabschnitt 1 ein Kraftfahrzeug 2 in einem autonomen Fahrbetrieb auf eine Gefahrensituation 3 zu. Im vorliegenden Beispiel kann es sich bei der Gefahrensituation 3 etwa um einen Baustellenbereich handeln, der hier veranschaulichend durch ein Verkehrszeichen 4 gekennzeichnet ist. In diesem Baustellenbereich, also in der Gefahrensituation 3, ist eine Führung oder ein Verlauf von Fahrstreifen des Straßenabschnitts 1 geändert, sodass sich ein - hier gestrichelt angedeuteter - temporärer Straßenverlauf 5 ergibt. Zusätzlich dargestellt sind weitere oder andere Verkehrsteilnehmer 6. Bei diesen Verkehrsteilnehmern 6 handelt es sich vorliegend beispielhaft um ein dem Kraftfahrzeug 2 vorausfahrendes Fahrzeug 7 und ein sich ebenfalls auf dem Straßenabschnitt 1 in einer Umgebung des Kraftfahrzeugs 2 befindendes drittes Fahrzeug 8. Eine Fahrtrichtung des Kraftfahrzeugs 2 und des vorausfahrenden Fahrzeugs 7 sind hier schematisch durch einen jeweiligen Pfeil angedeutet. Außerhalb des Straßenabschnitts 1 ist eine externe Datenquelle 9 dargestellt, bei der es sich beispielsweise um einen Teil einer Verkehrsleitinfrastruktur oder eine in einem Kommunikationsnetzwerk betriebene Servereinrichtung handeln kann. Wie hier weiterhin schematisch angedeutet ist, können die Fahrzeuge 2, 7, 8 untereinander und/oder mit der externen Datenquelle 9 durch eine jeweilige kabellose Datenverbindung verbunden oder verbindbar sein.

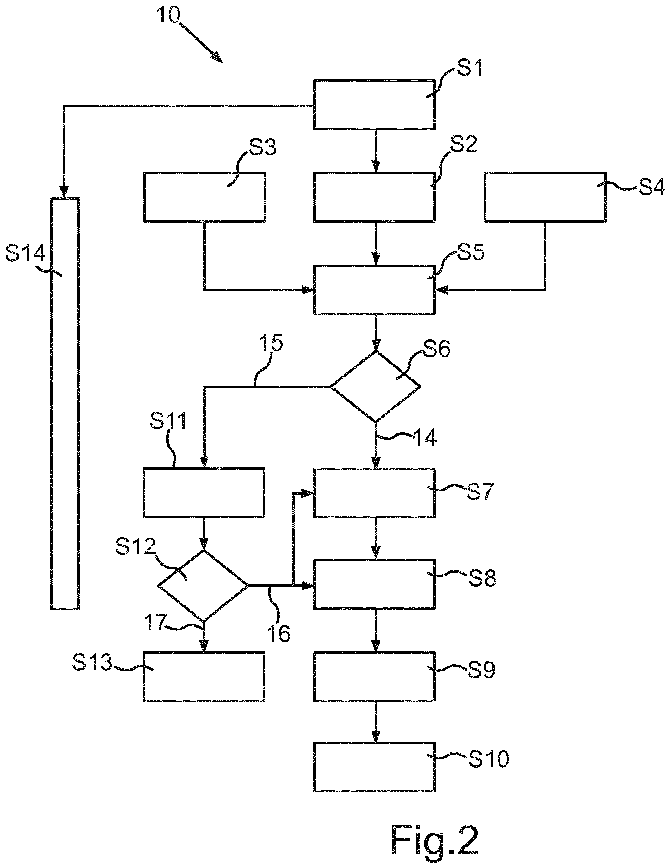

Fig. 2 zeigt einen beispielhaften schematischen Ablaufplan 10 eines Verfahrens zum Betreiben eines Assistenzsystems eines Kraftfahrzeugs. Dies kann insbesondere das in Fig. 1 dargestellte Kraftfahrzeug 2 sein, welches ein schematisch angedeutet dargestelltes Assistenzsystems 11 aufweist. Der Ablaufplan 10 beziehungsweise das entsprechende Verfahren werden im Folgenden unter Bezugnahme auf die in Fig. 1 dargestellte Verkehrssituation erläutert.

Der Ablaufplan 10 und somit das entsprechende Verfahren beginnen mit einem Verfahrensschritt S1. Hier kann beispielsweise das Assistenzsystem 11 gestartet oder aktiviert werden, der autonome Fahrbetrieb des Kraftfahrzeugs 2 aktiviert oder gestartet werden, eine Zielangabe für die aktuelle Fahrt des Kraftfahrzeugs 2 erfolgen, ein Benutzerprofil eines Fahrers oder Fahrzeugführers des Kraftfahrzeugs 2 geladen werden und/oder eine Klassifikation für verschiedene Funktionen und/oder Inhalte eines Infotainmentsystems 12 des Kraftfahrzeugs 2 und/oder für verschiedene Arten von möglichen Gefahrensituationen bereitgestellt, empfangen oder geladen werden und/oder dergleichen mehr.

In einem Verfahrensschritts S2 werden dann Situationsdaten erfasst oder ermittelt, die eine Situation des Kraftfahrzeugs 2 charakterisieren. Dies kann beispielsweise mittels einer Sensorik 13 des Kraftfahrzeugs 2 erfolgen, welche ihre Sensordaten dem Assistenzsystem 11 übermitteln kann. Die Sensorik 13 kann beispielsweise eine Umfeldsensorik sein oder umfassen, welche beispielsweise Geschwindigkeiten, Positionen und Abstände der Verkehrsteilnehmer 6 relativ zueinander und/oder relativ zu dem Kraftfahrzeug 2 ermitteln kann. Ebenso kann die Sensorik 13 beispielsweise eine Verkehrszeichenerkennung zum Erfassen und Erkennen des Verkehrszeichens 4 umfassen. So kann beispielsweise die Gefahrensituation 3 erkannt werden. Weiterhin kann die Sensorik 13 ebenso eine Innenraum- oder Insassenüberwachung umfassen, beispielsweise eine Fahrerbeobachtungskamera zum optischen Erfassen oder Überwachen des Fahrzeugführers des Kraftfahrzeugs 2. Die Situationsdaten können ebenso Eigenschaften des Kraftfahrzeugs 2 selbst umfassen, beispielsweise einen aktuellen Fahrmodus, oder Fahrzustand und dergleichen mehr.

Beispielsweise parallel können in einem Verfahrensschritts S3 weitere Daten, die die aktuelle Verkehrssituation auf dem Straßenabschnitt 1 - und somit zumindest indirekt auch die Situation des Kraftfahrzeugs 2 - charakterisieren oder beschreiben, beispielsweise von einem oder mehreren der Verkehrsteilnehmer 6 und/oder von der externen Datenquelle 9 empfangen werden. Hierfür kann das Kraftfahrzeug 2 oder das Assistenzsystem 11 eine entsprechende Kommunikationseinrichtung aufweisen. Dabei können unterschiedliche Kommunikationstechniken und/oder -protokolle verwendet werden, beispielsweise WLAN-, Richtfunk-, Bluetooth-, Radio- oder Mobilfunk-Verbindungen. Ebenso kann beispielsweise parallel in einem Verfahrensschritt S4, etwa mittels der Sensorik 13 - Zustandsdaten erfasst werden, die einen Zustand des Fahrzeugführers charakterisieren. Die in den Verfahrensschritten S3 und/oder S4 erfassten Daten können dem Assistenzsystem 11 bereitgestellt oder übermittelt werden.

In einem Verfahrensschritt S5 kann dann von dem Assistenzsystem 11 anhand von oder auf Basis der in den Verfahrensschritten S2, S3, S4 erfassten Daten ein Zeitpunkt ermittelt werden, zu dem das Kraftfahrzeug 2 voraussichtlich die Gefahrensituation 3 erreichen wird.

In einem Verfahrensschritts S6 kann dann ermittelt und überprüft werden, ob bis zu dem im Verfahrensschritts S5 ermittelten Zeitpunkt genügend Zeit zur Verfügung steht, damit der Fahrzeugführer des Kraftfahrzeugs 2 vor oder bis zum Erreichen der Gefahrensituation 3 die Kontrolle über das Kraftfahrzeug 2 übernehmen kann, wofür er eine gewisse Übernahmezeit benötigt. Das Übernehmen der Kontrolle über das Kraftfahrzeug 2 durch den Fahrzeugführer kann beispielsweise deshalb vorgesehen oder wünschenswert sein, da aufgrund des geänderten temporären Straßenverlaufs 5 ein das Kraftfahrzeug 2 in dem autonomen Fahrbetrieb führendes oder steuerndes System des Kraftfahrzeugs 2 beispielsweise mit der entsprechenden Längs- und/oder Querführung des Kraftfahrzeugs 2 überfordert sein kann. Letzteres kann beispielsweise aufgrund von für das System nicht mit ausreichender Zuverlässigkeit erkennbaren Markierungen des temporären Straßenverlaufs 5 der Fall sein. Um zu ermitteln, ob genügend Zeit für die Übernahme der Kontrolle durch den Fahrzeugführer zur Verfügung steht, kann die voraussichtliche Übernahmezeit ermittelt werden, die der Fahrzeugführer voraussichtlich zur Übernahme der Kontrolle über das Kraftfahrzeug 2 benötigt. Zum Ermitteln dieser voraussichtlichen Übernahmezeit können beispielsweise ebenfalls die in den Verfahrensschritten S2, S3, S4 erfassten Daten und/oder daraus abgeleitete Daten oder Größen, wie beispielsweise ein Zustand des Fahrzeugführers, berücksichtigt oder ausgewertet werden. Ebenso kann beispielsweise berücksichtigt werden, welche Funktion und/oder welchen Inhalt des Infotainmentsystems 12 der Fahrzeugführer momentan nutzt, da hierdurch die voraussichtliche und eine tatsächliche Übernahmezeit wesentlich beeinflusst oder bestimmt sein können.

Zum Ermitteln der Übernahmezeit in Abhängigkeit von der genutzten Funktion des Infotainmentsystems 12 kann eine entsprechende Zuordnung oder Klassifikation, beispielsweise in tabellarischer Form vorgegeben sein. Dabei können den einzelnen Funktionen des Infotainmentsystems 12 jeweilige Übernahmezeiten oder ein jeweiliger Einfluss auf die gesamte Übernahmezeit zugeordnet sein. Beispielsweise kann einem Abspielen rein akustischer Medien wie zum Beispiel eines Radioprogramms, von Musik oder eines Hörbuchs, eine Übernahmezeit oder ein Einfluss von ein bis zwei Sekunden zugeordnet sein. Einer Anzeige einfacher, insbesondere zumindest im Wesentlichen statischer, Inhalte, wie zum Beispiel von Wetterinformationen, Börsenkursen oder Routeninformationen, kann eine Übernahmezeit oder ein Einfluss von einer bis zu wenigen Sekunden, beispielsweise von drei bis vier Sekunden, zugeordnet sein. Einer Anzeige komplexer oder umfangreicher zumindest im Wesentlichen statischer Inhalte, zum Beispiel eines E-Buches (ebook) oder eines Nachrichtenartikels, immer kann eine Übernahmezeit oder ein Einfluss von wenigen Sekunden, beispielsweise von drei bis fünf Sekunden zugeordnet sein. Einer Anzeige dynamischer Inhalte, beispielsweise von Filmen oder Musikvideos, kann eine Übernahmezeit oder ein Einfluss von mehreren Sekunden, beispielsweise von fünf bis sechs Sekunden, zugeordnet sein. Einer interaktiven Infotainmentfunktion, wie beispielsweise einem Videospiel, einer Internetrecherche, einem Video-Chat oder einem Kurznachrichtendienst, kann eine Übernahmezeit oder ein Einfluss von beispielsweise 30 bis 60 Sekunden zugeordnet sein. Einer interaktiven Infotainmentfunktion mit Beeinträchtigung einer Umgebungswahrnehmung des Nutzers, beispielsweise einem Nutzen oder Erleben einer virtuellen Realität mit einem Head-Mounted Display oder einer VR-Brille (VR: Virtual Reality), kann eine Übernahmezeit oder ein Einfluss von beispielsweise ein bis drei Minuten zugeordnet sein, was beispielsweise eine zum Abnehmen und Ablegen des Head-Mounted Displays benötigte Rüstzeit einschließen kann. Einer Funktion, die in einer zum manuellen Führen oder Steuern des Kraftfahrzeugs 2 unzulässigen Stellung oder Position des Fahrzeugführers genutzt wird, bei der sich der Fahrzeugführer also beispielsweise in einer Liegeposition, entgegen der Fahrtrichtung des Kraftfahrzeugs 2 ausgerichtet oder in einem Exoskelett zur Nutzung einer VR-Anwendung befindet, kann eine Übernahmezeit oder ein Einfluss von mehreren Minuten, beispielsweise zwei bis fünf Minuten zugeordnet sein. Einem Inhalt mit starker emotionaler Bindung oder Belastung des Fahrzeugführers kann beispielsweise eine Übernahmezeit oder ein Einfluss von bis zu einer halben Stunde zugeordnet sein, bis eine volle Aufmerksamkeit des Fahrzeugführers bezüglich des umgebenden Verkehrsgeschehens erreicht ist. Bei derartigen Inhalten kann eine relativ langsame Aufweckphase aus einem tranceähnlichen Zustand im Gegensatz zu einer abrupten Unterbrechung der Wiedergabe des Inhaltes oder der Nutzung der Funktion vorgesehen sein, um emotionale Schäden zu vermeiden.

Steht genug Zeit für die Übernahme der Kontrolle durch den Fahrzeugführer zur Verfügung, so kann das Verfahren einem Pfad 14 zu einem Verfahrensschritt S7 folgen. Im Verfahrensschritt S7 kann ein Angebot von dem Fahrzeugführer zur Nutzung bereitgestellten, also zugänglich gemachten Funktionen und/oder Inhalten des Infotainmentsystems 12 in Abhängigkeit von dem im Verfahrensschritt S5 ermittelten Zeitpunkt basierend auf der vorgegebenen Klassifikation aller Funktionen und Inhalte des Infotainmentsystems 12 bezüglich der Übernahmezeit oder ihres jeweiligen Einflusses auf die Übernahmezeit angepasst werden. Dieses Anpassen kann eine Unterbrechung einer aktuellen Wiedergabe, also einer aktuellen Nutzung einer bestimmten Funktion und/oder eines bestimmten Inhalts ebenso bedeuten wie ein Verhindern oder Ermöglichen einer Nutzung, also beispielsweise eines Startens oder Aktivieren, einer bestimmten Funktion und/oder eines bestimmten Inhalts.

Je nach Situation können sich hier verschiedene Fälle (use cases) ergeben. In einem besten Fall (best case) kann beispielsweise der autonome Fahrbetrieb des Kraftfahrzeugs 2 aktiviert sein und fehlerfrei funktionieren, wobei die jeweilige Fahrstrecke für das entsprechende System, also für das Kraftfahrzeug 2 mit ausreichender Zuverlässigkeit erkennbar ist, dieses Erkennen und das Führen des Kraftfahrzeugs 2 nicht einschränkende oder behindernde Wetterverhältnisse herrschen, in der Umgebung des Kraftfahrzeugs 2 befindliche Verkehrsteilnehmer eine relativ hohe, insbesondere maximale, Vertrauenseinstufung haben, der Fahrzeugführer des Kraftfahrzeugs 2 wach, aufmerksam und gesund ist und die Fahrt andauert. In einem solchen Fall ist keine Einschränkung des Angebots des Infotainmentsystems 12 notwendig, das heißt, das gesamte technisch verfügbare Programm oder Angebot von Funktionen und/oder Inhalten kann dem Fahrzeugführer zur Nutzung bereitgestellt oder zugänglich gemacht werden.

In einem weiteren Fall (use case 1) weicht die Situation von dem besten Fall dadurch ab, dass das Kraftfahrzeug 2 sich - wie in Fig. 1 dargestellt - einer Baustelle nähert. In diesem Fall kann beispielsweise das Angebot des Infotainmentsystems 12 dahingehend angepasst werden, dass eine Nutzung oder Wiedergabe von interaktiven Inhalten, beispielsweise eines Videospiels, beendet oder verhindert und das nutzbare Angebot beispielsweise auf die Wiedergabe oder Anzeige statischer Textinformationen reduziert wird.

In einem weiteren Fall (use case 2) kann die Situation von dem besten Fall beispielsweise dadurch abweichen, dass Kraftfahrzeug 2 voraussichtlich in beispielsweise fünf Minuten die Autobahn, auf der es sich momentan bewegt, verlassen wird, wobei es im Bereich einer entsprechenden Autobahnausfahrt oder einer sich daran anschließenden Landstraße so stark regnet, dass das Kraftfahrzeug 2 voraussichtlich dort eine jeweilige Fahrstreifen- oder Fahrbahnmarkierung nicht zuverlässig erkennen kann, sodass die Fahraufgabe, also das Führen oder Steuern des Kraftfahrzeugs 2, vom Fahrzeugführer übernommen werden muss. Dementsprechend kann das Angebot des Infotainmentsystems 12 noch stärker als im vorherigen Fall (use case 1) eingeschränkt werden, beispielsweise auf die Wiedergabe von Musik. Ebenso kann das Infotainmentsystem 12 oder die Wiedergabe jeglicher Inhalte vollständig ausgeschaltet werden, was eine maximale Einschränkung bedeuten kann.

In einem schlechtesten Fall (worst case) kann sich die Situation von dem besten Fall dadurch unterscheiden, dass es zu einer Störung kommt und/oder sich das Kraftfahrzeug 2 einer Gefahrensituation, beispielsweise der Gefahrensituation 3, nähert, wobei der Fahrzeugführer jedoch alkoholisiert ist. Der Zustand des Fahrzeugführers, also der Fahrerstatus ist also nicht mehr innerhalb eines gesetzlich erlaubten oder vorgesehenen Rahmens und der Fahrzeugführer kann die Fahraufgabe, also die Kontrolle über das Kraftfahrzeug 2 nicht übernehmen. In einem solchen Fall kann das Kraftfahrzeug 2 beispielsweise automatisch gestoppt werden, wobei dann im Stand alle Funktionen und/oder Inhalte des Infotainmentsystems 12 uneingeschränkt genutzt werden können.

Wird im aktuellen Fall oder der aktuellen Situation ermittelt, dass der Fahrzeugführer die Kontrolle über das Kraftfahrzeug 2 übernehmen muss oder übernehmen soll und der Fahrzeugführer sich in einem fahrtüchtigen Zustand befindet, so kann in einem Verfahrensschritt S8 eine Übernahmeaufforderung an den Fahrzeugführer ausgegeben werden. Im obigen, als use case 2 gekennzeichneten Beispiel oder Fall kann eine derartige Übernahmeaufforderung beispielsweise lauten: "So, wir verlassen gleich die Autobahn. Es regnet draußen sehr stark, die Sicht auf die Fahrbahn ist eingeschränkt, deswegen funktioniert die hochautomatische Fahrfunktion leider nicht. Die restliche Wegstrecke darfst Du fahren."

In einem Verfahrensschritt S9 kann ein Verhalten oder eine Reaktion des Fahrzeugführers auf die im Verfahrensschritt S8 ausgegebene Übernahmeaufforderung überwacht werden.

In einem Verfahrensschritt S10. kann eine Anpassung eines für das beschriebene Verfahren verwendeten Algorithmus und/oder einer für das beschriebene Verfahren verwendeten Datengrundlage in Abhängigkeit von der mittels der Überwachung erfassten Reaktion oder des Mittels der Bewachung erfassten Verhaltens des Fahrzeugführers vorgenommen werden, sodass zukünftige Ausführungen oder Instanzen des Verfahrens durch diese Anpassung besser an individuelle Eigenschaften des Fahrzeugführers angepasst sind oder durchgeführt werden können.

Ergibt sich bei der Überprüfung im Verfahrensschritt S6, dass nicht genügend Zeit für die Übernahme der Kontrolle durch den Fahrzeugführer zur Verfügung steht, so kann das Verfahren einem Pfad 15 zu einem Verfahrensschritt S11 folgen. Im Verfahrensschritt S11 kann das Kraftfahrzeug 2 automatisch gestoppt werden. Dies kann wie oben für den schlechtesten Fall beschrieben allerdings auch dann geschehen, wenn zwar genügend Zeit zur Verfügung stünde, der Fahrzeugführer die Kontrolle jedoch aus anderen Gründen, beispielsweise aufgrund seines Zustands, nicht übernehmen kann oder darf.

Es kann nach dem Verfahrensschritt S11 in einem Verfahrensschritt S12 ebenso eine erste oder weitere Abfrage oder Ermittlung der Fahrtüchtigkeit des Fahrzeugführers erfolgen. Erweist sich der Fahrzeugführer als fahrtüchtig, so kann das Verfahren dann einem Pfad 16 folgen, der zu den bereits beschriebenen Verfahrensschritten S7 oder S8 führen kann. Ergibt sich im Verfahrensschritt S12, dass der Fahrzeugführer fahruntüchtig ist, so kann das Verfahren einem Pfad 17 zu einem Verfahrensschritt S13 folgen.

Im Verfahrensschritts S13 kann beispielsweise automatisch ein Personenbeförderungsdienst mit einem Weitertransport des Fahrzeugführers von einer aktuellen Position des Kraftfahrzeugs 2 beauftragt, also mit anderen Worten beispielsweise ein Taxi bestellt werden. Zusätzlich oder alternativ kann beispielsweise eine vorgegebene oder vorbestimmte Kontaktperson des Fahrzeugführers automatisch informiert werden.

Beispielsweise parallel zu einigen oder allen der vorherigen Verfahrensschritte, insbesondere zu den Verfahrensschritten S2 bis S10, können in einem Verfahrensschritt S14 weitere Maßnahmen oder Funktionen durchgeführt oder ausgeführt werden. Dies können beispielsweise aufmerksamkeitserhöhende Maßnahmen, beispielsweise eine Interaktion des Assistenzsystems mit dem Fahrzeugführer, sein. Zusätzlich oder alternativ kann beispielsweise regelmäßig das Angebot des Infotainmentsystems 12 überprüft und beispielsweise in Abhängigkeit von einer jeweils aktuell bis zum Erreichen eines jeweils aktuellen Fahrtziels des Kraftfahrzeugs 2 verbleibenden Restzeit oder Restdauer angepasst werden.

Das Verfahren kann beispielsweise beendet werden, wenn das Kraftfahrzeug 2 sein jeweiliges Ziel erreicht hat, die Fahrt beendet wird und/oder von dem Fahrzeugführer kein Infotainmentangebot gewünscht wird.

Insgesamt zeigen die beschriebenen Beispiele, wie durch die Erfindung ein sicherer, zumindest zeitweise autonomer Fahrbetrieb eines Kraftfahrzeugs mit erhöhtem Insassenkomfort, insbesondere für den Fahrzeugführer des Kraftfahrzeugs, ermöglicht werden kann.

## Patentansprüche

1. Verfahren (10) zum Betreiben eines Assistenzsystems (11) für ein Kraftfahrzeug (2), umfassend
- Erfassen von Situationsdaten, die eine Situation des Kraftfahrzeugs (2) charakterisieren,
- Ermitteln eines Zeitpunktes, zu dem das Kraftfahrzeug (2) autonom fahrend voraussichtlich in eine Gefahrensituation (3) mit einem oberhalb eines vorgegebenen Schwellenwertes liegenden Gefahrenpotential geraten wird, anhand der erfassten Situationsdaten,
- Anpassen eines einem Fahrzeugführer zur Nutzung bereitgestellten Angebots von Funktionen und/oder Inhalten eines Infotainmentsystems (12) des Kraftfahrzeugs (2) in Abhängigkeit von dem ermittelten Zeitpunkt basierend auf einer vorgegebenen Klassifikation aller Funktionen und/oder Inhalte des Infotainmentsystems (12) hinsichtlich ihres jeweiligen Einflusses auf eine Übernahmezeit, die der Fahrzeugführer voraussichtlich zur Übernahme einer Kontrolle über das Kraftfahrzeug (2) benötigt,
- Erfassen von Zustandsdaten, die einen Zustand des Fahrzeugführers charakterisieren,
- Ermitteln der Übernahmezeit in Abhängigkeit von den erfassten Zustandsdaten und
- Anpassen des Angebots in Abhängigkeit von der ermittelten Übernahmezeit, wobei
die Übernahmezeit mit dem Erkennen der Gefahrensituation (3) durch das Assistenzsystem (11) oder mit einer Ausgabe eines entsprechenden Hinweises beginnt und die Übernahmezeit endet, sobald der Fahrzeugführer die Kontrolle über das Kraftfahrzeug (2) übernommen hat.

2. Verfahren (10) nach Anspruch 1,
**dadurch gekennzeichnet, dass**
- eine Insassenüberwachung zum Erfassen der Zustandsdaten erst dann automatisch aktiviert wird, wenn das Kraftfahrzeug (2) sich der Gefahrensituation (3) bis auf einen vorgegebenen Maximalabstand angenähert hat und
- die Insassenüberwachung automatisch beendet wird, sobald der Fahrzeugführer in der jeweils aktuellen Gefahrensituation (3) die Kontrolle über das Kraftfahrzeug (2) übernommen hat und/oder sobald sich das Kraftfahrzeug (2) nicht mehr in der jeweils aktuellen Gefahrensituation (3) befindet.

3. Verfahren (10) nach einem der vorhergehenden Ansprüche,
**gekennzeichnet durch**
- Erfassen von Zustandsdaten, die einen Zustand des Fahrzeugführers charakterisieren,
- Anpassen eines Wertes wenigstens eines zum automatisierten Führen des Kraftfahrzeugs (2) verwendeten Parameters in Abhängigkeit von den erfassten Zustandsdaten.

4. Verfahren (10) nach einem der vorhergehenden Ansprüche,
**dadurch gekennzeichnet, dass**
- eine Vertrauenseinstufung anderer Verkehrsteilnehmer (6), insbesondere basierend auf einem jeweiligen Fahrmodus und/oder Personenzustand, und/oder von Insassen des Kraftfahrzeugs (2) vorgenommen und berücksichtigt wird bei
- der Bestimmung des Zeitpunktes, zu dem das Kraftfahrzeug (2) voraussichtlich in die Gefahrensituation (3) geraten wird, und/oder
- bei dem Anpassen des Angebots von Funktionen und/oder Inhalten,
wobei die Vertrauenseinstufung angibt, wie berechenbar der jeweilige Verkehrsteilnehmer (6) oder dessen Verhalten ist, wobei dem jeweiligen Verkehrsteilnehmer (6) ein Vertrauenswert zugeordnet wird, der aus mehreren Einzeldaten oder -faktoren zusammengesetzt oder berechnet ist oder wird.

5. Verfahren (10) nach einem der vorhergehenden Ansprüche,
**dadurch gekennzeichnet, dass**
zusätzlich regelmäßig unabhängig von einer erkannten oder prognostizierten Gefahrensituation (3) das Angebot von Funktionen und/oder Inhalten in Abhängigkeit von einer voraussichtlichen Restdauer bis zum Erreichen eines jeweils aktuellen Fahrtziels des Kraftfahrzeugs (2) automatisch angepasst wird.

6. Verfahren (10) nach einem der vorhergehenden Ansprüche,
**dadurch gekennzeichnet, dass**
das Kraftfahrzeug (2) automatisch gestoppt wird, wenn ermittelt wird, dass die Übernahmezeit länger ist als eine Zeitdauer bis zum Erreichen der Gefahrensituation (3).

7. Verfahren (10) nach Anspruch 6,
**dadurch gekennzeichnet, dass**
- Erfassen von Zustandsdaten, die einen Zustand des Fahrzeugführers charakterisieren,
- Ermitteln, ob sich der Fahrzeugführer in einem fahrtüchtigen Zustand befindet durch Verarbeiten der Zustandsdaten
- bei aufgrund der Gefahrensituation (3) automatisch gestopptem Kraftfahrzeug (2) automatisch eine vorbestimmte Kontaktperson des Fahrzeugführers informiert und/oder ein Personenbeförderungsdienst mit einem Weitertransport des Fahrzeugführers von einer jeweils aktuellen Position des Kraftfahrzeugs (2) beauftragt wird, wenn ermittelt wurde, dass sich der Fahrzeugführer nicht in einem fahrtüchtigen Zustand befindet.

8. Verfahren (10) nach einem der vorhergehenden Ansprüche,
**dadurch gekennzeichnet, dass**
- eine Übernahmeaufforderung an den Fahrzeugführer ausgegeben wird, die den Fahrzeugführer dazu auffordert, die Kontrolle über das Kraftfahrzeug (2) zu übernehmen,
- ein Verhalten des Fahrzeugführers zwischen dem Ausgeben der Übernahmeaufforderung und dem Übernehmen der Kontrolle durch den Fahrzeugführer erfasst wird und
- in Abhängigkeit von dem erfassten Verhalten eine Datengrundlage für ein zukünftiges Anpassen des Angebots und/oder für ein zukünftiges Ermitteln der Übernahmezeit angepasst wird.

9. Kraftfahrzeug (2), welches eine Sensorik zum Erfassen von Situationsdaten, die eine Situation des Kraftfahrzeugs (2) charakterisieren, sowie ein mit der Sensorik gekoppeltes Assistenzsystem (11) und ein Infotainmentsystem (12) aufweist,
wobei das Assistenzsystem (11) dazu eingerichtet ist,
- die Situationsdaten automatisch zu verarbeiten und dadurch einen Zeitpunkt zu ermitteln, zu dem das Kraftfahrzeug (2) autonom fahrend voraussichtlich in eine Gefahrensituation (3) mit einem oberhalb eines vorgegebenen Schwellenwertes liegenden Gefahrenpotential geraten wird, und
- durch Ansteuern des Infotainmentsystems (12) ein dem Fahrzeugführer zur Nutzung bereitgestelltes Angebot von Funktionen und/oder Inhalten des Infotainmentsystems (12) anzupassen in Abhängigkeit von dem ermittelten Zeitpunkt und basierend auf einer vorgegebenen Klassifikation aller Funktionen und/oder Inhalte des Infotainmentsystems (12) hinsichtlich ihres jeweiligen Einflusses auf eine Übernahmezeit, die der Fahrzeugführer voraussichtlich zur Übernahme einer Kontrolle über das Kraftfahrzeug (2) benötigt, und
- Zustandsdaten zu erfassen, die einen Zustand des Fahrzeugführers charakterisieren,
- in Abhängigkeit von den erfassten Zustandsdaten die Übernahmezeit zu ermitteln, und
- das Angebot in Abhängigkeit von der ermittelten Übernahmezeit anzupassen, wobei die Übernahmezeit mit dem Erkennen der Gefahrensituation (3) durch das Assistenzsystem (11) oder mit einer Ausgabe eines entsprechenden Hinweises beginnt und die Übernahmezeit endet, sobald der Fahrzeugführer die Kontrolle über das Kraftfahrzeug (2) übernommen hat.

## Claims

1. Method (10) for operating an assistance system (11) for a motor vehicle (2), comprising
- capturing situation data which characterize a situation of the motor vehicle (2),
- determining a time, at which the autonomously driving motor vehicle (2) is likely to get into a hazardous situation (3) with a hazard potential above a predefined threshold value, on the basis of the captured situation data,
- adapting an offer of functions and/or contents of an infotainment system (12) of the motor vehicle (2), which is made available to a vehicle driver for use, depending on the determined time on the basis of a predefined classification of all functions and/or contents of the infotainment system (12) with regard to their respective influence on a takeover time which is likely to be needed by the vehicle driver to take over control of the motor vehicle (2),
- capturing state data which characterize a state of the vehicle driver,
- determining the takeover time depending on the captured state data, and
- adapting the offer depending on the determined takeover time, wherein
the takeover time begins with the detection of the hazardous situation (3) by the assistance system (11) or with an output of a corresponding notice and the takeover time ends as soon as the vehicle driver has taken over control of the motor vehicle (2).

2. Method (10) according to Claim 1,
**characterized in that**
- occupant monitoring for capturing the state data is automatically activated only when the motor vehicle (2) has approached a predefined maximum distance from the hazardous situation (3), and
- the occupant monitoring is automatically terminated as soon as the vehicle driver in the respective current hazardous situation (3) has taken over control of the motor vehicle (2) and/or as soon as the motor vehicle (2) is no longer in the respective current hazardous situation (3).

3. Method (10) according to one of the preceding claims,
**characterized by**
- capturing state data which characterize a state of the vehicle driver,
- adapting a value of at least one parameter used for the automated driving of the motor vehicle (2) depending on the captured state data.

4. Method (10) according to one of the preceding claims,
**characterized in that**
- a trust classification of other road users (6), in particular based on a respective driving mode and/or personal state, and/or of occupants of the motor vehicle (2) is carried out and taken into account
- when determining the time at which the motor vehicle (2) is likely to get into the hazardous situation (3), and/or
- when adapting the offer of functions and/or contents, wherein the trust classification indicates how predictable the respective road user (6) or the behaviour thereof is, wherein a trust value is assigned to the respective road user (6) and has been or is composed of or calculated from a plurality of individual data items or factors.

5. Method (10) according to one of the preceding claims,
**characterized in that**
the offer of functions and/or contents is additionally regularly automatically adapted independently of a detected or predicted hazardous situation (3) depending on a likely remaining time before reaching a respective current destination of the motor vehicle (2).

6. Method (10) according to one of the preceding claims,
**characterized in that**
the motor vehicle (2) is automatically stopped if it is determined that the takeover time is longer than a period needed to reach the hazardous situation (3).

7. Method (10) according to Claim 6,
**characterized in that**
- state data which characterize a state of the vehicle driver are captured,
- it is determined whether the vehicle driver is in a state fit for driving by processing the state data,
- in the case of a motor vehicle (2) which is automatically stopped on account of the hazardous situation (3), a predetermined contact person of the vehicle driver is automatically informed and/or a passenger transport service is tasked with onward transport of the vehicle driver from a respective current position of the motor vehicle (2) if it has been determined that the vehicle driver is not in a state fit for driving.

8. Method (10) according to one of the preceding claims,
**characterized in that**
- a takeover request is output to the vehicle driver and requests the vehicle driver to take over control of the motor vehicle (2),
- a behaviour of the vehicle driver between the outputting of the takeover request and the takeover of control by the vehicle driver is captured, and
- a data basis for future adaptation of the offer and/or for future determination of the takeover time is adapted depending on the captured behaviour.

9. Motor vehicle (2) having a sensor system for capturing situation data which characterize a situation of the motor vehicle (2) and an assistance system (11) coupled to the sensor system and an infotainment system (12), wherein
the assistance system (11) is configured
- to automatically process the situation data and to thereby determine a time at which the autonomously driving motor vehicle (2) is likely to get into a hazardous situation (3) with a hazard potential above a predefined threshold value, and
- to adapt an offer of functions and/or contents of the infotainment system (12), which is made available to the vehicle driver for use, by controlling the infotainment system (12) depending on the determined time and based on a predefined classification of all functions and/or contents of the infotainment system (12) with respect to their respective influence on a takeover time which is likely to be needed by the vehicle driver to take over control of the motor vehicle (2), and
- to capture state data which characterize a state of the vehicle driver,
- to determine the takeover time depending on the captured state data, and
- to adapt the offer depending on the determined takeover time, wherein the takeover time begins with the detection of the hazardous situation (3) by the assistance system (11) or with an output of a corresponding notice and the takeover time ends as soon as the vehicle driver has taken over control of the motor vehicle (2).

## Revendications

1. Procédé (10) permettant de faire fonctionner un système d'assistance (11) pour un véhicule automobile (2), comprenant les étapes consistant à
- détecter des données de situation qui caractérisent une situation du véhicule automobile (2),
- déterminer, à l'aide des données de situation détectées, le moment où le véhicule automobile (2) en conduite autonome se retrouvera probablement dans une situation dangereuse (3) avec un potentiel de danger situé au-dessus d'une valeur seuil prédéfinie,
- adapter une gamme de fonctions et/ou de contenu d'un système d'infodivertissement (12) du véhicule automobile (2), mise à la disposition d'un conducteur de véhicule pour son utilisation, en fonction du moment déterminé sur la base d'une classification prédéfinie de toutes les fonctions et/ou de tout le contenu du système d'infodivertissement (12) en ce qui concerne leur influence respective sur un délai de prise de contrôle que le conducteur de véhicule nécessite probablement pour reprendre le contrôle du véhicule automobile (2),
- détecter des données d'état qui caractérisent un état du conducteur de véhicule,
- déterminer le délai de prise de contrôle en fonction des données d'état détectées, et
- adapter la gamme en fonction du délai de prise de contrôle déterminé,
dans lequel
le délai de prise de contrôle commence par l'identification de la situation dangereuse (3) par le système d'assistance (11) ou par une sortie d'une indication correspondante, et le délai de prise de contrôle est terminé dès que le conducteur de véhicule a pris le contrôle du véhicule automobile (2).

2. Procédé (10) selon la revendication 1, **caractérisé en ce que**
- une surveillance des occupants pour détecter les données d'état n'est activée automatiquement que si le véhicule automobile (2) s'est approché de la situation dangereuse (3) à une distance maximale prédéfinie, et
- la surveillance des occupants est terminée automatiquement dès que le conducteur de véhicule a pris le contrôle du véhicule automobile (2) dans la situation dangereuse (3) respectivement actuelle, et/ou dès que le véhicule automobile (2) ne se trouve plus dans la situation dangereuse (3) respectivement actuelle.

3. Procédé (10) selon l'une quelconque des revendications précédentes, **caractérisé par**
- la détection de données d'état qui caractérisent un état du conducteur de véhicule,
- l'adaptation d'une valeur d'au moins un paramètre utilisé pour la conduite automatisée du véhicule automobile (2) en fonction des données d'état détectées.

4. Procédé (10) selon l'une quelconque des revendications précédentes, **caractérisé en ce que**
- une classification de la confiance pour d'autres usagers de la route (6), en particulier sur la base d'un mode de conduite et/ou d'un état de personne respectifs, et/ou pour des occupants du véhicule automobile (2) est effectuée et prise en compte pour
- la détermination du moment où le véhicule automobile (2) sera probablement confronté à la situation dangereuse (3), et/ou
- l'adaptation de la gamme de fonctions et/ou de contenu, la classification de la confiance indiquant à quel point l'usager de la route respectif (6) ou son comportement est prévisible, une valeur de confiance étant attribuée à l'usager de la route respectif (6) qui est ou sera composée ou calculée à partir de plusieurs données ou facteurs individuels.

5. Procédé (10) selon l'une quelconque des revendications précédentes, **caractérisé en ce qu'**en outre, indépendamment d'une situation dangereuse (3) identifiée ou pronostiquée, la gamme de fonctions et/ou de contenu est adaptée régulièrement de manière automatique en fonction d'une durée résiduelle probable jusqu'à ce qu'une destination respectivement actuelle du véhicule automobile (2) soit atteinte.

6. Procédé (10) selon l'une quelconque des revendications précédentes, **caractérisé en ce que** le véhicule automobile (2) est arrêté automatiquement s'il est déterminé que le délai de prise de contrôle est plus long qu'une durée jusqu'à ce la situation dangereuse (3) soit atteinte.

7. Procédé (10) selon la revendication 6, **caractérisé en ce que**
- des données d'état qui caractérisent un état du conducteur de véhicule sont détectées,
- il est déterminé si le conducteur de véhicule se trouve dans un état apte à la conduite par le traitement des données d'état,
- lorsque le véhicule automobile (2) est arrêté automatiquement en raison de la situation dangereuse (3), une personne à contacter prédéterminée du conducteur de véhicule est informée automatiquement et/ou un service de transport de personnes est chargé du transport ultérieur du conducteur de véhicule à partir d'une position respectivement actuelle du véhicule automobile (2) s'il a été déterminé que le conducteur de véhicule ne se trouve pas dans un état apte à la conduite.

8. Procédé (10) selon l'une quelconque des revendications précédentes, **caractérisé en ce que**
- une demande de prise de contrôle est sortie pour le conducteur de véhicule qui demande au conducteur de véhicule de prendre le contrôle du véhicule automobile (2),
- un comportement du conducteur de véhicule entre la sortie de la demande de prise de contrôle et la prise de contrôle par le conducteur de véhicule est détecté, et
- en fonction du comportement détecté, des données de base pour une adaptation future de la gamme et/ou pour une détermination future du délai de prise de contrôle sont adaptées.

9. Véhicule automobile (2) qui présente un système de capteurs pour détecter des données de situation qui caractérisent une situation du véhicule automobile (2), ainsi qu'un système d'assistance (11) couplé au système de capteurs et un système d'infodivertissement (12),
le système d'assistance (11) étant aménagé pour
- traiter automatiquement les données de situation et déterminer ainsi un moment où le véhicule automobile (2) en conduite autonome sera probablement confronté à une situation dangereuse (3) ayant un potentiel de danger situé au-dessus d'une valeur seuil prédéfinie, et
- par le pilotage du système d'infodivertissement (12), adapter une gamme de fonctions et/ou de contenu du système d'infodivertissement (12), proposée au conducteur de véhicule pour son utilisation, en fonction du moment déterminé et sur la base d'une classification prédéfinie de toutes les fonctions et/ou de tout le contenu du système d'infodivertissement (12) en ce qui concerne leur influence respective sur le délai de prise de contrôle que le conducteur de véhicule nécessitera probablement pour prendre le contrôle du véhicule automobile (2), et
- détecter des données d'état qui caractérisent un état du conducteur de véhicule,
- déterminer le délai de prise de contrôle en fonction des données d'état détectées, et
- adapter la gamme en fonction du délai de prise de contrôle déterminé, le délai de prise de contrôle commençant par l'identification de la situation dangereuse (3) par le système d'assistance (11) ou par une sortie d'une indication correspondante, et le délai de prise de contrôle se terminant dès que le conducteur de véhicule a pris le contrôle du véhicule automobile (2) .
